# EUROPEAN PATENT APPLICATION

(11) **EP 3 050 702 A1**
(43) Date of publication of application: **03.08.2016**
(21) Application number: 15823582.0
(22) Date of filing: 11.08.2015
(51) Int. Cl.: B32B 27/36, C08J 7/04

(54) **COATED FILM**

(30) Priority: 13.12.2014 JP 2014252539; 24.01.2015 JP 2015011862; 28.03.2015 JP 2015067764
(71) Applicant: Mitsubishi Plastics, Inc., Tokyo 100-8252 (JP)
(72) Inventor: KAWASAKI, Taishi, Maibara-shi, Shiga 5210234 (JP)
(74) Representative: Ter Meer Steinmeister & Partner
(86) International application number: PCT/JP2015/072741
(87) International publication number: WO 2016/092905

(57) **Abstract**

The present invention provides a coated film suffering from less fisheyes and having excellent mechanical strength and heat resistance as well as good adhesive properties which can be suitably used as various surface protective films, etc. The present invention relates to a coated film comprising a polyester film and a coating layer formed on at least one surface of the polyester film, the coating layer comprising a resin having a glass transition point of not higher than 0°C as a main component, the coating layer having a thickness of 0.01 to 3 µm.

## Description

### TECHNICAL FIELD

The present invention relates to a coated film, and more particularly, to a coated film hardly suffering from fisheyes and having excellent mechanical strength and heat resistance as well as good adhesive properties which can be suitably used as a surface protective film, for example, for preventing formation of scratches or deposition of contaminants upon transportation, storage or processing of resin plates, metal plates, etc.

### BACKGROUND ART

Hitherto, surface protective films have been extensively used in the applications of preventing formation of scratches or deposition of contaminants upon transportation, storage or processing of resin plates, metal plates, glass plates, etc., preventing formation of scratches or deposition of dirt and dusts or contaminants upon processing of members used in electronics-related fields such as liquid crystal display panels and polarizing plates, preventing deposition of contaminants upon transportation or storage of automobiles, protecting automobile painting against acid rain, protecting flexible printed boards upon plating or etching treatments thereof, and the like.

It has been required that these surface protective films can exhibit an adequate adhesion strength to various kinds of adherends such as resin plates, metal plates and glass plates upon transportation, storage or processing thereof, can be attached onto these adherends to protect the surface thereof, and can be easily peeled off from the adherends after accomplishing the objects as aimed. To overcome these tasks, there has been proposed the use of polyolefin-based films for the purpose of protecting the surface of the adherends (Patent Literatures 1 and 2).

However, since the polyolefin-based films are used as a base material of the surface protective films, it is not possible to avoid occurrence of defects generally called fisheyes, i.e., generation of gels or deteriorated products derived from raw materials of the film base raw material. For example, there tends to arise such a problem that when testing the adherend onto which the surface protective film is attached, these defects on the surface protective film are detected as defects of the adherend, etc., thereby causing disturbance of the test.

In addition, a base material for the surface protective films is required to have a certain degree of mechanical strength to such an extent that the base material is free of expansion owing to a tensile force applied upon various processes such as lamination onto the adherend, etc. However, the polyolefin-based films are generally deteriorated in mechanical strength, so that there tends to occur such a problem that the films are unsuitable for high-tension processing to be conducted owing to increase in velocity of processing of the film in view of the importance to productivity thereof.

Further, in the case where the processing temperature of the polyolefin-based films is increased for improving various properties thereof such as the processing velocity, the polyolefin-based films tend to have poor heat-shrink stability and therefore tend to be deteriorated in dimensional stability. For this reason, there is an increasing demand for films having not only less heat deformation but also excellent dimensional stability even when subjected to high-temperature processing.

### CITATION LIST

### Patent Literature

Patent Literature 1: Japanese Patent Application Laid-Open (KOKAI) No. 5-98219(1993)
Patent Literature 2: Japanese Patent Application Laid-Open (KOKAI) No. 2007-270005

### SUMMARY OF INVENTION

### TECHNICAL PROBLEM

The present invention has been accomplished to solve the above conventional problems. An object of the present invention is to provide a coated film hardly suffering from fisheyes and having excellent mechanical strength and heat resistance as well as good adhesive properties which can be suitably used as various surface protective films, etc.

### SOLUTION TO PROBLEM

As a result of the present inventors' earnest study in view of the above conventional problems, it has been found that these problems can be readily solved by using a coated film having a specific structure. The present invention has been attained on the basis of this finding.

That is, in an aspect of the present invention, there is provided a coated film comprising a polyester film and a coating layer formed on at least one surface of the polyester film, which coating layer comprises a resin having a glass transition point of not higher than 0°C as a main component and has a thickness of 0.01 to 3 µm.

### ADVANTAGEOUS EFFECTS OF INVENTION

In accordance with the present invention, there can be provided a coated film hardly suffering from fisheyes and having excellent mechanical strength and heat resistance as well as good adhesive properties which can be suitably used as various surface protective films, etc. Therefore, the present invention has a high industrial value.

### DESCRIPTION OF EMBODIMENTS

In order to achieve the above objects, i.e., reduction of occurrence of fisheyes in the film and improvement in mechanical strength and heat resistance of the film, it is considered to be necessary that a fundamental material of the base film is largely changed to the other materials. As a result of various studies based on the consideration, it has been found that the above objects can be achieved by using a polyester-based material that is largely different from the conventionally used polyolefin-based materials. However, when the material of the base film is largely changed as described above, the resulting film tends to be considerably deteriorated in adhesion properties. Thus, general polyester films have failed to attain satisfactory results.

In consequence, as a result of various studies for imparting good adhesion properties to the films by forming a coating layer thereon, it has been found that a coating layer comprising a resin having a glass transition point of not higher than 0°C as a main component and having a thickness that is controlled to the range of 0.01 to 3 µm can impart good adhesion properties to the resulting film. The present invention has been attained on the basis of this finding. In the following, the present invention is described in detail.

The polyester film constituting the coated film of the present invention may have either a single layer structure or a multilayer structure. Unless departing from the scope of the present invention, the polyester film may have not only a two or three layer structure but also a four or more layer structure, and the layer structure of the polyester film is not particularly limited. The polyester film preferably has a two or more layer structure to form the respective characteristic layers and thereby provide a multi-functionalized film.

The polyester used in the present invention may be in the form of either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned at least one compound selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned at least one compound selected from the group consisting of ethylene glycol, diethylene glycol, propylene glycol, butanediol, 4-cyclohexanedimethanol and neopentyl glycol.

From the standpoint of producing a film capable of withstanding various processing conditions, the polyester film is preferably enhanced in mechanical strength and heat resistance (dimensional stability upon heating). Therefore, the polyester film preferably comprises a less amount of a copolyester component. More specifically, the content of monomers forming the copolyester in the polyester film is preferably in the range of not more than 10 mol%, more preferably not more than 5 mol%, and even more preferably not more than about 3 mol% as a content of a diether component that is produced as a by-product upon polymerization of a homopolyester. The configuration of the polyester film is preferably a film formed of polyethylene terephthalate prepared by polymerizing terephthalic acid and ethylene glycol among the aforementioned compounds, or polyethylene naphthalate, in view of good mechanical strength and heat resistance thereof, and more preferably a film formed of polyethylene terephthalate in view of facilitated production of the film and good handling properties when used in the applications such as a surface protective film.

The polymerization catalyst for production of the polyester is not particularly limited, and any conventionally known compounds may be used as the polymerization catalyst. Examples of the polymerization catalyst include an antimony compound, a titanium compound, a germanium compound, a manganese compound, an aluminum compound, a magnesium compound and a calcium compound. Of these compounds, the antimony compound is preferred in view of inexpensiveness. In addition, the titanium compound or the germanium compound is also preferably used because they exhibit a high catalytic activity, and are capable of conducting the polymerization even when used in a small amount, and enhancing transparency of the obtained film owing to a less amount of the metal remaining in the film. Further, the use of the titanium compound is more preferred because the germanium compound is expensive.

When using the titanium compound upon production of the polyester, the content of the titanium element in the polyester is preferably in the range of not more than 50 ppm, more preferably 1 to 20 ppm, and even more preferably 2 to 10 ppm. When the content of the titanium element in the polyester is excessively large, the polyester tends to suffer from accelerated deterioration in the step of melt-extruding the polyester so that the resulting film tends to exhibit a strong yellowish color. On the other hand, when the content of the titanium element in the polyester is excessively small, the polymerization efficiency tends to be deteriorated, so that the cost tends to be increased, and the resulting film tends to hardly exhibit a sufficient strength. In addition, when using the titanium compound upon production of the polyester, for the purpose of suppressing deterioration thereof in the melt-extrusion step, a phosphorus compound is preferably used to reduce an activity of the titanium compound. As the phosphorus compound, orthophosphoric acid is preferably used in view of productivity and thermal stability of the obtained polyester. The content of the phosphorus element in the polyester is preferably in the range of 1 to 300 ppm, more preferably 3 to 200 ppm, and even more preferably 5 to 100 ppm based on the amount of the polyester melt-extruded. When the content of the phosphorus compound in the polyester is excessively large, gelation of the polyester or inclusion of foreign matters therein tends to be caused. On the other hand, when the content of the phosphorus compound in the polyester is excessively small, it is not possible to sufficiently reduce an activity of the titanium compound, so that the resulting film tends to exhibit a strong yellowish color.

For the purpose of mainly imparting easy-slipping properties to the polyester film and preventing occurrence of flaws on the polyester film in the respective steps, the polyester layer of the polyester film used in the present invention may also comprise particles. When the particles are compounded in the polyester layer, the kinds of particles compounded in the polyester layer are not particularly limited as long as they are capable of imparting easy-slipping properties to the resulting film. Specific examples of the particles include inorganic particles such as particles of silica, calcium carbonate, magnesium carbonate, barium carbonate, calcium sulfate, calcium phosphate, magnesium phosphate, kaolin, aluminum oxide, zirconium oxide and titanium oxide; and organic particles such as particles of acrylic resins, styrene resins, urea resins, phenol resins, epoxy resins and benzoguanamine resins. Further, there may also be used deposited particles obtained by precipitating and finely dispersing a part of metal compounds such as a catalyst during the process for production of the polyester. Of these particles, from the standpoint of exhibiting good effects even when used in a small amount, silica particles and calcium carbonate particles are preferably used.

Also, the average particle diameter of the particles incorporated into the polyester layer is preferably in the range of not more than 10 µm, and more preferably 0.01 to 5.0 µm. When the average particle diameter of the particles is more than 10 µm, there tends occur such a fear that the particles are fallen off from the resulting film, or the obtained film tends to be deteriorated in transparency.

The content of the particles in the polyester layer may vary depending upon the average particle diameter of the particles, and is therefore not particularly limited. The content of the particles in the polyester layer is preferably in the range of less than 5% by weight, more preferably 0.0003 to 1% by weight, and even more preferably 0.0005 to 0.5% by weight. When no particles or merely a less amount of the particles are used in the polyester layer, although the obtained polyester film exhibits a high transparency and therefore becomes a good film, there tend to occur problems such as insufficient slipping properties of the resulting film, so that it is necessary to take measures for enhancing the slipping properties by incorporating particles into the coating layer. On the other hand, when the content of the particles in the polyester layer is excessively large, the resulting film tends to suffer from high haze and tends to be deteriorated in transparency, so that there tend to occur problems such as increase in degree of difficulty of inspection of defects such as foreign matters, etc., for example, when conducting various inspections.

The shape of the particles used in the polyester layer is also not particularly limited, and may be any of a spherical shape, a massive shape, a bar shape, a flat shape, etc. Further, the hardness, specific gravity, color and the like of the particles are also not particularly limited.

These particles may be used in combination of any two or more kinds thereof, if required.

The method of adding the particles to the polyester layer is not particularly limited, and any conventionally known methods can be suitably used therefor. For example, the particles may be added at any optional stages in the process for producing the polyester forming the respective layers. The particles are preferably added to the polyester after completion of the esterification reaction or transesterification reaction.

From the standpoint of high transparency of the polyester film, it is preferred that the particles are not incorporated over a whole portion of the film, but incorporated into only an outermost surface layer of the polyester film that is formed into a multilayer structure. In particular, it is more preferred that the film is formed into a three layer structure, and the particles are incorporated into opposite surface layers rather than an intermediate layer thereof.

The polyester film according to the present invention may also comprise, in addition to the above particles, conventionally known additives such as an ultraviolet absorber, an antioxidant, an antistatic agent, a thermal stabilizer, a lubricant, a dye, a pigment, etc., if required.

The thickness of the polyester film used in the present invention is not particularly limited, and the polyester film may have any thickness as long as the film having a suitable film shape can be formed. The thickness of the polyester film is preferably in the range of 2 to 350 µm and more preferably 5 to 200 µm.

As the film-forming method used in the present invention, conventionally known film-forming methods may be adopted without any particular limitations. For example, in the case of producing a biaxially oriented polyester film, first, a raw polyester material is extruded from a die using an extruder in the form of a molten sheet, and the molten sheet is cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn sheet is further drawn in the direction perpendicular to the drawing direction of the first stage. In this case, the drawing temperature is usually 70 to 170°C, and the draw ratio is usually 2.5 to 7 times and preferably 3.0 to 6 times. Successively, the resulting biaxially drawn film is heat-set at a temperature of 180 to 270°C under tension or under relaxation within 30% to obtain a biaxially oriented film. Upon the above drawing steps, there may also be used the method in which the drawing in each direction is carried out in two or more stages. In such a case, the multi-stage drawing is preferably performed such that the total draw ratio in each of the two directions finally falls within the above-specified range.

Also, upon producing the polyester film constituting the coated film according to the present invention, there may also be used a simultaneous biaxial drawing method. The simultaneous biaxial drawing method is such a method in which the undrawn sheet is drawn and oriented in both of the machine and width directions at the same time while maintaining the sheet in a suitably temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 180 to 270°C under tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus, etc.

Next, the method for forming the coating layer constituting the coated film according to the present invention is explained. The coating layer of the present invention is laminated on at least one surface of the polyester film, and is in the form of a thin film having a thickness of 0.01 to 3 µm.

An in-line coating method is effectively used for forming the coating layer in the form of a thin film. The in-line coating method is a method in which the coating step is carried out during the step of producing the polyester film. More specifically, in the in-line coating method, the coating step is carried out in an optional stage from melt-extrusion of the polyester to taking-up of the resulting film through heat-setting after drawing. In general, in the in-line coating method, any of the undrawn sheet obtained by melting and rapidly cooling and the monoaxially drawn film is preferably subjected to the coating step.

For example, in the case of a sequential biaxial drawing process, there may be used such an excellent method in which after subjecting the monoaxially drawn film that is drawn in a length direction (longitudinal direction) to the coating step, the thus coated monoaxially drawn film is drawn in a lateral direction thereof. The above method has such an advantage that the film is formed simultaneously with formation of the coating layer thereon. Also, since the drawing is conducted after the coating step, the thickness of the coating layer may be changed by adjusting a draw ratio of the film, so that the thin-film coating step can be more easily conducted as compared to the off-line coating method.

In addition, by providing the coating layer on the film before the drawing step, it is possible to subject the coating layer together with the base film to the drawing step, so that the coating layer can be strongly adhered to the base film. Further, upon production of the biaxially oriented polyester film, since the film is drawn while grasping end portions of the film by clips, etc., it is possible to constrain the film in both of the longitudinal and lateral directions. As a result, in the heat-setting step, it is possible to expose the film to high temperature without formation of wrinkles, etc., while maintaining a flatness of the film. For this reason, the heat treatment after the coating step can be conducted at a high temperature that is not achievable by the other methods, so that it is possible to enhance film-forming properties of the coating layer, strongly adhere the coating layer to the base film, and further strengthen the coating layer.

According to the step conducted by the aforementioned in-line coating method, no large change in dimension of the film is caused depending on whether or not the coating layer is formed thereon, and no large risk of formation of flaws or deposition of foreign matters is also caused depending on whether or not the coating layer is formed thereon. Therefore, the in-line coating method is considerably advantageous as compared to the off-line coating method that needs the coating step as an additional step. That is, the in-line coating method has such an advantage that any of dimensional change, formation of flaws, deposition of foreign matters and increase in production costs can be eliminated. Furthermore, as a result of various studies, it has been found that the in-line coating method is capable of more effectively reducing an amount of adhesive residue deposited onto an adherend. It is considered that this is because the in-line coating method is capable of conducting the heat treatment at a much higher temperature that is not achievable in the off-line coating method, so that the coating layer and the base film can be more strongly adhered to each other.

In the present invention, it is essentially required that the coated film comprises the coating layer comprising a resin having a glass transition point of not higher than 0°C as a main component. The term "as a main component" as used herein means that the content of the resin in the coating layer is not less than 50% by weight.

It has been found that by using the resin having a glass transition point of not higher than 0°C as a main component of the coating layer, it is possible to impart adequate adhesion properties to the polyester film. As the resin having a glass transition point of not higher than 0°C, there may be used conventionally known resins. Specific examples of the resin include polyester resins, acrylic resins, urethane resins, polyvinyl resins (such as polyvinyl alcohol and vinyl chloride-vinyl acetate copolymers), etc. Of these resins, in particular, in view of good adhesion properties and coatability, preferred are polyester resins, acrylic resins and urethane resins. Further, in view of much higher adhesion properties and reusability, more preferred are polyester resins and acrylic resins. In addition, in view of good adhesiveness to the polyester film as the base material and a less amount of adhesive residue on an adherend, most preferred are polyester resins, whereas in view of still higher adhesion properties and anti-blocking properties relative to a rear side of the film, most preferred are acrylic resins.

The polyester resins may be those polyester resins produced, for example, from the following polycarboxylic acids and polyhydroxy compounds as main constituents. More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfoisophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, a trimellitic acid monopotassium salt and ester-forming derivatives thereof. Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethyleneoxide glycol, dimethylol propionic acid, glycerin, trimethylol propane, sodium dimethylol ethyl sulfonate and potassium dimethylol propionate. The polyester resins may be synthesized by appropriately selecting one or more compounds from the aforementioned respective kinds of compounds and subjecting these compounds to polycondensation reaction by an ordinary method.

Among the aforementioned polyester resins, in order to reduce a glass transition point thereof to not more than 0°C, the polyester resins comprising an aliphatic polycarboxylic acid or an aliphatic polyhydroxy compound as a constituent thereof are preferably used. In general, the polyester resin is constituted of an aromatic polycarboxylic acid and a polyhydroxy compound including an aliphatic polyhydroxy compound. Therefore, in order to reduce a glass transition point of the polyester resin to the level lower than that of generally used polyester resins, it is effective to incorporate an aliphatic polycarboxylic acid into the polyester resin as a constituent thereof. From the standpoint of reducing a glass transition point of the polyester resin, among the aliphatic polycarboxylic acids, those aliphatic polycarboxylic acids having a large number of carbon atoms are suitably used, and the number of carbon atoms in the aliphatic polycarboxylic acids is preferably in the range of not less than 6 (adipic acid), more preferably not less than 8, and even more preferably not less than 10. The upper limit of the preferred range of the number of carbon atoms in the aliphatic polycarboxylic acids is 20.

Also, from the standpoint of improving adhesion properties of the resulting film, the content of the aliphatic polycarboxylic acid in an acid component of the polyester resin is preferably not less than 2 mol%, more preferably not less than 4 mol%, even more preferably not less than 6 mol%, and further even more preferably not less than 10 mol%, and the upper limit of the preferred range of the content of the aliphatic polycarboxylic acid in an acid component of the polyester resin is 50 mol%.

In order to reduce a glass transition point of the polyester resin, the number of carbon atoms in the aliphatic polyhydroxy compound is preferably not less than 4 (butanediol). The content of the aliphatic polyhydroxy compound in a hydroxy component of the polyester resin is preferably in the range of not less than 10 mol%, and more preferably not less than 30 mol%.

In view of good adaptability to an in-line coating method, it is preferred that the polyester resin is rendered aqueous. For this reason, the polyester resin preferably comprises sulfonic acid, a sulfonic acid metal salt, a carboxylic acid or a carboxylic acid metal salt. In particular, among these compounds, from the standpoint of good dispersibility in water, preferred are sulfonic acid and a sulfonic acid metal salt, and more preferred is a sulfonic acid metal salt.

In the case where the sulfonic acid, sulfonic acid metal salt, carboxylic acid or carboxylic acid metal salt is used in the polyester resin, the content of the sulfonic acid, sulfonic acid metal salt, carboxylic acid or carboxylic acid metal salt in an acid component of the polyester resin is preferably in the range of 0.1 to 10 mol%, and more preferably 0.2 to 8 mol%. When using the sulfonic acid, sulfonic acid metal salt, carboxylic acid or carboxylic acid metal salt in the above-specified range, the obtained polyester resin can exhibit good dispersibility in water.

Also, in view of good appearance of the coating layer when formed by an in-line coating, good adhesion properties and anti-blocking properties against the polyester film, and reduction in amount of adhesive residue on an adherend when used as a surface protective film, the polyester resin preferably comprises a certain amount of an aromatic polycarboxylic acid as an acid component thereof. Among the aromatic polycarboxylic acids, from the standpoint of good adhesion properties of the resulting film, aromatic polycarboxylic acids having a benzene ring structure such as terephthalic acid and isophthalic acid are more preferably used than those having a naphthalene ring structure. In addition, in order to further improve adhesion properties of the resulting film, it is more preferred that two or more kinds of aromatic polycarboxylic acids are used in combination with each other.

In order to improve adhesion properties of the resulting film, it is essential that the glass transition point of the polyester resin is not higher than 0°C. The glass transition point of the polyester resin is preferably in the range of not higher than -10°C, and more preferably not higher than -20°C. The lower limit of the preferred range of the glass transition point of the polyester resin is -60°C. When controlling the glass transition point of the polyester resin to the above-specified range, it is possible to readily produce a film having optimum adhesion properties.

The acrylic resin used in the present invention is in the form of a polymer obtained from a polymerizable monomer including an acrylic monomer and a methacrylic monomer ("acrylic" and "methacrylic" are hereinafter also totally referred to merely as "(meth)acrylic"). The polymer may be either a homopolymer or a copolymer, or may also be a copolymer with a polymerizable monomer other than the acrylic or methacrylic monomer.

The polymer may also include a copolymer of any of the aforementioned polymers with the other polymer (such as, for example, a polyester and a polyurethane). Examples of such a copolymer include a block copolymer and a graft copolymer. In addition, the polymer may also include a polymer obtained by polymerizing the polymerizable monomer in a polyester solution or a polyester dispersion (which may also be in the form of a mixture of the polymers). Further, the polymer may also include a polymer obtained by polymerizing the polymerizable monomer in a polyurethane solution or a polyurethane dispersion (which may also be in the form of a mixture of the polymers). Similarly, the polymer may also include a polymer obtained by polymerizing the polymerizable monomer in the other polymer solution or the other polymer dispersion (which may also be in the form of a mixture of the polymers).

The above polymerizable monomer is not particularly limited. Examples of the typical compounds of the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate, 2-ethylhexyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl propionate and vinyl acetate; various silicon-containing polymerizable monomers such as γ-methacryloxypropyl trimethoxysilane and vinyl trimethoxysilane; various phosphorus-containing vinyl-based monomers; various vinyl halogenate-based monomers such as vinyl chloride and vinylidene chloride; and various conjugated dienes such as butadiene.

In order to reduce a glass transition point of the resin to not higher than 0°C, it is necessary to use a (meth)acrylic compound whose homopolymer has a glass transition point of not higher than 0°C. Examples of the (meth)acrylic compound whose homopolymer has a glass transition point of not higher than 0°C include ethyl acrylate (glass transition point: -22°C), n-propyl acrylate (glass transition point: -37°C), isopropyl acrylate (glass transition point: -5°C), n-butyl acrylate (glass transition point: -55°C), n-hexyl acrylate (glass transition point: - 57°C), 2-ethylhexyl acrylate (glass transition point: -70°C), isononyl acrylate (glass transition point: -82°C), lauryl acrylate (glass transition point: -65°C), 2-hydroxyethyl acrylate (glass transition point: -15°C), etc.

From the standpoint of attaining good adhesion properties of the resulting film, the content of the monomer whose homopolymer has a glass transition point of not higher than 0°C, as a monomer constituting the acrylic resin, is preferably in the range of not less than 30% by weight, more preferably not less than 45% by weight, even more preferably not less than 60% by weight, and further even more preferably not less than 70% by weight based on a whole amount of the acrylic resin. On the other hand, the upper limit of the preferred range of the content of the monomers is 99% by weight. By controlling the content of the monomer in the acrylic resin to the above-specified range, the resulting film can exhibit good adhesion properties.

Also, in order to improve adhesion properties of the resulting film, the glass transition point of the monomer whose homopolymer has a glass transition point of not higher than 0°C is preferably not higher than -20°C, more preferably not higher than -30°C, even more preferably not higher than -40°C, and further even more preferably not higher than -50°C. The lower limit of the preferred range of the glass transition point of the monomer whose homopolymer has a glass transition point of not higher than 0°C is -100°C. By controlling a glass transition point of the monomer whose homopolymer has a glass transition point of not higher than 0°C to the above-specified range, it is possible to readily produce a film having adequate adhesion properties.

As the monomer used for improving adhesion properties of the resulting film, there are preferably used alkyl (meth)acrylates comprising an alkyl group having 4 to 30 carbon atoms, more preferably 4 to 20 carbon atoms and even more preferably 4 to 12 carbon atoms. From the standpoints of industrial mass-productivity as well as good handling properties and supply stability, acrylic resins comprising n-butyl acrylate and 2-ethylhexyl acrylate as a constituent thereof are optimum.

The more optimum configuration of the acrylic resin for improving adhesion properties of the resulting film is as follows. That is, the content of a total amount of n-butyl acrylate and 2-ethylhexyl acrylate in the acrylic resin is preferably not less than 30% by weight, more preferably not less than 40% by weight, and even more preferably not less than 50% by weight. The upper limit of the preferred range of the content of a total amount of n-butyl acrylate and 2-ethylhexyl acrylate in the acrylic resin is 99% by weight.

In order to improve adhesion properties of the resulting film, it is essential that the glass transition point of the acrylic resin is not higher than 0°C. The glass transition point of the acrylic resin is preferably in the range of not higher than -10°C, more preferably not higher than -20°C, and even more preferably not higher than -30°C. The lower limit of the preferred range of the glass transition point of the acrylic resin is -80°C. By controlling the glass transition point of the acrylic resin to the above-specified range, it is possible to readily produce a film having optimum adhesion properties.

The urethane resin used in the present invention is a high-molecular compound having a urethane bond in a molecule thereof. The urethane resin is usually produced by the reaction between a polyol and an isocyanate. Examples of the polyol include polycarbonate polyols, polyether polyols, polyester polyols, polyolefin polyols and acrylic polyols. These compounds may be used alone or in combination of any two or more thereof.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

From the standpoint of improving adhesion properties of the resulting film, among the above polycarbonate polyols, preferred are the polycarbonate polyols constituted of a diol component comprising a chain-like alkyl group preferably having 4 to 30 carbon atoms, more preferably 4 to 20 carbon atoms, and even more preferably 6 to 12 carbon atoms. From the standpoints of industrial mass-productivity as well as good handling properties and supply stability, copolymerized polycarbonate polyols comprising 1,6-hexanediol or at least two diols selected from the group consisting of 1,4-butanediol, 1,5-pentanediol and 1,6-hexanediol are optimum.

Examples of the polyether polyols include polyethylene glycol, polypropylene glycol, polyethylene/propylene glycol, polytetramethylene ether glycol and polyhexamethylene ether glycol.

From the standpoint of improving adhesion properties of the resulting film, among the above polyether polyols, preferred are polyether polyols comprising an aliphatic diol, in particular, a straight-chain aliphatic diol, which preferably has 2 to 30 carbon atoms, more preferably 3 to 20 carbon atoms and even more preferably 4 to 12 carbon atoms, as a monomer forming the polyether.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol), as well as those compounds comprising a derivative unit of a lactone compound such as polycaprolactone.

Among the above polyols, in view of good adhesion properties of the resulting film, the polycarbonate polyols and the polyester polyols are more suitably used, and the polycarbonate polyols are even more suitably used.

Examples of a polyisocyanate compound used for producing the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α',α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidene cyclohexyl-4,4'-diamine, 1,4-diaminocyclohexane and 1,3-bisaminomethyl cyclohexane.

The urethane resin used in the present invention may be dispersed or dissolved in a solvent as a medium, and is preferably dispersed or dissolved in water as the medium. In order to disperse or dissolve the urethane resin in water, there may be used those urethane resins of a forcibly emulsifiable type which can be dispersed and dissolved using an emulsifier, or those urethane resins of a self-emulsifiable type or a water-soluble type which are obtained by introducing a hydrophilic group into urethane resins, etc. Among these urethane resins, in particular, self-emulsifiable type urethane resins which are ionomerized by introducing an ionic group into a skeleton of urethane resins are preferred because they are excellent in storage stability of the coating solution as well as water resistance and transparency of the resulting coating layer.

Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one component of the polyol, the polyisocyanate, the chain extender and the like. In particular, there is preferably used the method in which a carboxyl group-containing diol is used to introduce a desired amount of a carboxyl group into the urethane resins by suitably adjusting an amount of the diol component charged.

For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine. When using such a urethane resin, the carboxyl group thereof from which the neutralizing agent is removed in the drying step after the coating step may be used as a crosslinking reaction site which can be reacted with other crosslinking agents. As a result, the coating solution using the above-described urethane resin is excellent in stability even when preserved in the form of a solution before subjected to coating treatment, and further the coating layer obtained therefrom can be further improved in durability, solvent resistance, water resistance, anti-blocking properties, etc.

In order to improve adhesion properties of the resulting film, it is essential that the glass transition point of the urethane resin is not higher than 0°C. The glass transition point of the urethane resin is preferably in the range of not higher than -10°C, more preferably not higher than -20°C, and even more preferably not higher than -30°C. The lower limit of the preferred range of the glass transition point of the urethane resin is -80°C. By controlling the glass transition point of the urethane resin to the above-specified range, it is possible to readily produce a film having optimum adhesion properties.

In addition, for the purpose of controlling the strength and adhesion properties of the resulting coating layer, a crosslinking agent may be used in combination with the aforementioned components.

As the crosslinking agent, there may be used conventionally known crosslinking agents. Examples of the crosslinking agent include an epoxy compound, a melamine compound, an oxazoline compound, an isocyanate compound, a carbodiimide compound, a silane coupling compound, a hydrazide compound, an aziridine compound, etc. Among these crosslinking agents, from the standpoints of attaining good strength of the coating layer and controlling adhesion properties thereof, preferred are an epoxy compound, a melamine compound, an oxazoline compound, an isocyanate compound, a carbodiimide compound and a silane coupling compound, and more preferred is an epoxy compound.

In the case of using a crosslinking agent other than the epoxy compound, if the content of the crosslinking agent in the coating layer is excessively large, the resulting film tends to be deteriorated in adhesion properties. Therefore, in the case of using a crosslinking agent other than the epoxy compound, it is required to take care of a content thereof in the coating layer.

The epoxy compound is a compound having an epoxy group in a molecule thereof. Examples of the epoxy compound include condensation products of epichlorohydrin with a hydroxyl group of ethylene glycol, polyethylene glycol, glycerol, polyglycerol, bisphenol A, etc., or an amino group. Specific examples of the epoxy compound include polyepoxy compounds, diepoxy compounds, monoepoxy compounds and glycidyl amine compounds. Examples of the polyepoxy compounds include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

From the standpoint of good adhesion properties of the resulting coating layer, among the above epoxy compounds, preferred are polyether-based epoxy compounds. As to the number of epoxy groups in the epoxy compounds, tri- or higher-functional polyfunctional polyepoxy compounds are more preferably used than bifunctional epoxy compounds.

The melamine compound is a compound having a melamine skeleton therein. Examples of the melamine compound include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In view of good reactivity with various compounds, the melamine compound preferably comprises a hydroxyl group. In addition, there may also be used those compounds obtained by subjecting a urea or the like to co-condensation with a part of melamine. Further, a catalyst may also be used to enhance reactivity of the resulting melamine compound.

The oxazoline compound is a compound having an oxazoline group in a molecule thereof. The oxazoline compound is preferably in the form of a polymer having an oxazoline group which may be either a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of industrial availability thereof. The other monomers used in the copolymer are not particularly limited as long as they are monomers that are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl, cyclohexyl or the like); unsaturated carboxylic acids such as acrylic acid, methacrylic acid, itaconic acid, maleic acid, fumaric acid, crotonic acid, styrenesulfonic acid and salts thereof (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamides and N,N-dialkyl (meth)acrylamides (in which the alkyl group may be methyl, ethyl, n-propyl, isopropyl, n-butyl, isobutyl, t-butyl, 2-ethylhexyl, cyclohexyl or the like); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

The content of an oxazoline group in the oxazoline compound is preferably in the range of 0.5 to 10 mmol/g, more preferably 1 to 9 mmol/g, even more preferably 3 to 8 mmol/g, and further even more preferably 4 to 6 mmol/g. When controlling the content of an oxazoline group in the oxazoline compound to the above specified range, the resulting coating film can be improved in durability, and therefore it is possible to readily control adhesion properties of the resulting film.

The isocyanate-based compound is a compound having an isocyanate derivative structure such as typically an isocyanate and a blocked isocyanate. Examples of the isocyanate include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate include polymers and derivatives of these isocyanates such as biuret compounds, isocyanurate compounds, uretdione compounds and carbodiimide-modified compounds thereof. These isocyanates may be used alone or in combination of any two or more thereof. Of these isocyanates, in view of avoiding yellowing due to irradiation with ultraviolet rays, aliphatic isocyanates and alicyclic isocyanates are more suitably used as compared to aromatic isocyanates.

When the isocyanate-based compound is used in the form of a blocked isocyanate, examples of blocking agents used for production thereof include bisulfites; phenol-based compounds such as phenol, cresol and ethyl phenol; alcohol-based compounds such as propylene glycol monomethyl ether, ethylene glycol, benzyl alcohol, methanol and ethanol; active methylene-based compounds such as dimethyl malonate, diethyl malonate, methyl acetoacetate, ethyl acetoacetate and acetyl acetone; mercaptan-based compounds such as butyl mercaptan and dodecyl mercaptan; lactam-based compounds such as ε-caprolactam and δ-valerolactam; amine-based compounds such as diphenyl aniline, aniline and ethylene imine; acid amide-based compounds such as acetanilide and acetic acid amide; and oxime-based compounds such as formaldehyde, acetaldoxime, acetone oxime, methyl ethyl ketone oxime and cyclohexanone oxime. These blocking agents may be used alone or in combination of any two or more thereof.

In addition, in the present invention, the isocyanate-based compounds may be used in the form of a single substance or in the form of a mixture with various polymers or a bonded product therewith. The isocyanate-based compounds are preferably used in the form of a mixture or a bonded product with polyester resins or urethane resins from the standpoint of improving dispersibility or crosslinking reactivity of the isocyanate-based compounds.

The carbodiimide-based compound is a compound having a carbodiimide structure. The carbodiimide-based compound may be used for enhancing wet heat resistance of the coating layer, etc. The carbodiimide-based compound is in the form of a compound having one or more carbodiimide structures or carbodiimide derivative structures in a molecule thereof, and the preferred carbodiimide-based compound is a polycarbodiimide-based compound having two or more carbodiimide structures or carbodiimide derivative structures in a molecule thereof in view of attaining good adhesion properties or the like of the resulting coating layer.

The carbodiimide-based compound may be synthesized by conventionally known techniques. In general, the carbodiimide-based compound may be obtained by a condensation reaction of a diisocyanate compound. The diisocyanate compound used in the reaction is not particularly limited, and may be either an aromatic diisocyanate or an aliphatic diisocyanate. Specific examples of the diisocyanate compound include tolylene diisocyanate, xylene diisocyanate, diphenylmethane diisocyanate, phenylene diisocyanate, naphthalene diisocyanate, hexamethylene diisocyanate, trimethyl hexamethylene diisocyanate, cyclohexane diisocyanate, methyl cyclohexane diisocyanate, isophorone diisocyanate, dicyclohexyl diisocyanate and dicyclohexylmethane diisocyanate.

Further, in order to improve water solubility or water dispersibility of the polycarbodiimide-based compound, a surfactant or a hydrophilic monomer such as a polyalkyleneoxide, a quaternary ammonium salt of a dialkylamino alcohol and a hydroxyalkyl sulfonic acid salt may be added thereto unless the addition thereof eliminates the effects of the present invention.

Meanwhile, these crosslinking agents are used for improving performance of the coating layer by allowing the crosslinking agents to react with the compounds contained in the coating layer during a drying step or a film-forming step thereof. Therefore, it is estimated that the resulting coating layer comprises the unreacted crosslinking agent, compounds obtained after the reaction, or a mixture thereof.

Also, for the purpose of improving anti-blocking properties and slipping properties of the resulting film as well as controlling adhesion properties thereof, particles may be used in combination with the aforementioned components for forming the coating layer.

In the present invention, the polyester film may be provided on the surface opposed to the surface on which the coating layer comprising a resin having a glass transition point of not higher than 0°C as a main component (hereinafter also referred to as a "first coating layer") with an additional coating layer (hereinafter also referred to as a "second coating layer").

For example, in some cases, it is preferred that the second coating layer into which a release agent is incorporated is provided mainly for the purpose of reducing occurrence of blocking in the first coating layer. Although the adhesion properties of the film can be improved by providing the first coating layer, there tends to occur such a problem that the film suffers from blocking when taken up into a roll. As a result of various studies for taking measures for solving the above problem, it has been found that occurrence of the blocking is reduced by providing the second coating layer comprising a release agent on the surface of the polyester film opposed to the surface on which the first coating layer is provided.

Also, in another embodiment of the present invention, it is desired to provide a second coating layer into which an antistatic agent is incorporated, mainly for the purpose of imparting an anti-static performance to the film and thereby reducing opportunity of deposition of dusts and dirt thereon owing to electrostatic charge generated by friction upon peeling the film (peeling electrification or frictional electrification). As a result of various studies, it has also been found that by providing the second coating layer comprising an antistatic agent on the surface of the polyester film opposed to the surface on which the first coating layer is provided, it is possible to reduce deposition of foreign matters such as dusts and dirt. The thus obtained coated film is usefully used as a protective film in the production process of optical members such as a polarizing plate, for example, in the application fields in which inclusion of foreign matters should be avoided or a high transparency is required.

The second coating layer may be produced by either an in-line coating method or an off-line coating method. From the standpoints of low production costs, good releasing performance by in-line heat treatment and stabilization of antistatic performance, among these methods, the in-line coating method is preferably used.

In the configuration in which a coating layer comprising a release agent is formed as the second coating layer, the release agent used in the second coating layer is not particularly limited, and there may be used any conventionally known release agents. Examples of the release agent include a long-chain alkyl group-containing compound, a fluorine compound, a silicone compound, a wax, etc. Among these release agents, from the standpoints of less contamination and excellent performance for reducing occurrence of blocking, the long-chain alkyl group-containing compound and the fluorine compound are preferably used. In particular, in the case of attaching importance to reduction in occurrence of blocking, the silicone compound is preferably used. In addition, in order to improve decontamination properties on the surface of the film, the wax is effectively used. These release agents may be used alone or in combination of any two or more thereof.

The long-chain alkyl group-containing compound means a compound comprising a linear or branched alkyl group usually having not less than 6 carbon atoms, preferably not less than 8 carbon atoms, and more preferably not less than 12 carbon atoms. Examples of the alkyl group include a hexyl group, an octyl group, a decyl group, a lauryl group, an octadecyl group, a behenyl group, etc. Examples of the alkyl group-containing compound include various compounds such as a long-chain alkyl group-containing polymer compound, a long-chain alkyl group-containing amine compound, a long-chain alkyl group-containing ether compound, a long-chain alkyl group-containing quaternary ammonium salt, etc. In view of good heat resistance and decontamination properties, the polymer compound is preferred. Also, from the standpoint of effectively attaining good releasing properties, the polymer compound comprising a long-chain alkyl group on a side chain thereof is more preferred.

The polymer compound comprising a long-chain alkyl group on a side chain thereof may be produced by reacting a polymer compound comprising a reactive group with a compound comprising an alkyl group capable of reacting with the reactive group. Examples of the reactive group include a hydroxyl group, an amino group, a carboxyl group, an acid anhydride, etc.

Examples of the compound comprising the reactive group include polyvinyl alcohol, polyethylene imine, polyethylene amine, reactive group-containing polyester resins, reactive group-containing poly(meth)acrylic resins, etc. Of these compounds, in view of good releasing properties and easiness of handling, preferred is polyvinyl alcohol.

Examples of the compound comprising an alkyl group capable of reacting with the reactive group include long-chain alkyl group-containing isocyanates such as hexyl isocyanate, octyl isocyanate, decyl isocyanate, lauryl isocyanate, octadecyl isocyanate and behenyl isocyanate; long-chain alkyl group-containing organic chlorides such as hexyl chloride, octyl chloride, decyl chloride, lauryl chloride, octadecyl chloride and behenyl chloride; long-chain alkyl group-containing amines; long-chain alkyl group-containing alcohols; and the like. Of these compounds, in view of good releasing properties and easiness of handling, preferred are long-chain alkyl group-containing isocyanates, and more preferred is octadecyl isocyanate.

In addition, the polymer compound comprising a long-chain alkyl group on a side chain thereof may also be produced by polymerizing a long-chain alkyl (meth)acrylate or copolymerizing the long-chain alkyl (meth)acrylate with the other vinyl group-containing monomer. Examples of the long-chain alkyl (meth)acrylate include hexyl (meth)acrylate, octyl (meth)acrylate, decyl (meth)acrylate, lauryl (meth)acrylate, octadecyl (meth)acrylate, behenyl (meth)acrylate, etc.

The above fluorine compound is a compound comprising a fluorine atom therein. From the standpoint of a good appearance of the coating layer formed by the in-line coating method, among these fluorine compounds, organic fluorine compounds are preferably used. Examples of the organic fluorine compounds include perfluoroalkyl group-containing compounds, polymers of fluorine atom-containing olefin compounds, and aromatic fluorine compounds such as fluorobenzene. In view of good releasing properties of the resulting film, preferred are the perfluoroalkyl group-containing compounds. Further, as the fluorine compound, there may also be used the below-mentioned compounds including a long-chain alkyl compound.

Examples of the perfluoroalkyl group-containing compounds include perfluoroalkyl group-containing (meth)acrylates such as perfluoroalkyl (meth)acrylates, perfluoroalkyl methyl (meth)acrylates, 2-perfluoroalkyl ethyl (meth)acrylates, 3-perfluoroalkyl propyl (meth)acrylates, 3-perfluoroalkyl-1-methyl propyl (meth)acrylates and 3-perfluoroalkyl-2-propenyl (meth)acrylates, or polymers thereof; perfluoroalkyl group-containing vinyl ethers such as perfluoroalkyl methyl vinyl ethers, 2-perfluoroalkyl ethyl vinyl ethers, 3-perfluoropropyl vinyl ether, 3-perfluoroalkyl-1-methyl propyl vinyl ethers and 3-perfluoroalkyl-2-propenyl vinyl ethers, or polymers thereof; and the like. Of these perfluoroalkyl group-containing compounds, in view of good heat resistance and decontamination properties of the resulting film, preferred are the polymers. The polymers may be produced from either a single compound solely or a plurality of compounds. In addition, in view of good releasing properties of the resulting film, the perfluoroalkyl groups preferably have 3 to 11 carbon atoms. Further, the perfluoroalkyl group-containing compounds may also be in the form of a polymer with the compound comprising the below-mentioned long-chain alkyl compound. Furthermore, from the standpoint of good adhesion properties to the base material of the film, the polymer with vinyl chloride is also preferred.

The above silicone compound is a compound having a silicone structure in a molecule thereof. Examples of the silicone compound include alkyl silicones such as dimethyl silicone and diethyl silicone, phenyl group-containing phenyl silicones, methyl phenyl silicones, etc. As the silicone compound, there may also be used silicone compounds comprising various functional groups. Examples of the functional groups include an ether group, a hydroxyl group, an amino group, an epoxy group, a carboxyl group, a halogen group such as a fluorine group, a perfluoroalkyl group, a hydrocarbon group such as various alkyl groups and various aromatic groups, and the like. Also, as silicones comprising the other functional groups, there are generally known silicones comprising a vinyl group and hydrogen silicones comprising a silicon atom to which a hydrogen atom is directly bonded. Further, addition-type silicones obtained by using both of the aforementioned silicones in combination with each other (silicones of such a type as produced by addition reaction between the vinyl group and hydrogen silane) may also be used.

Furthermore, as the silicone compound, there may also be used modified silicones such as an acrylic-grafted silicone, a silicone-grafted acrylic compound, an amino-modified silicone and a perfluoroalkyl-modified silicone. In view of good heat resistance and decontamination properties of the resulting film, among these silicone compounds, preferred are curable-type silicone resins. As the curable-type silicone resins, there may be used any kinds of curing reaction-type silicones such as condensation type silicones, addition type silicones, active energy ray-curable type silicones, etc. Among the aforementioned silicone compounds, from the standpoint of less transfer of the compounds onto a rear side surface of the film when taken up into a roll, preferred is the condensation type silicone compound.

The preferred form of the silicone compound used is preferably a polyether group-containing silicone compound from the standpoints of less transfer of the compounds onto a rear side surface of the film, good dispersibility in an aqueous solvent and high adaptability to in-line coating. The polyether group of the polyether group-containing silicone compound may be bonded to a side chain or terminal end of the silicone compound, or may be bonded to a main chain of the silicone. From the standpoint of good dispersibility in an aqueous solvent, the polyether group is preferably bonded to a side chain or terminal end of the silicone compound.

The polyether group of the polyether group-containing silicone compound may have a conventionally known structure. From the standpoint of good dispersibility in an aqueous solvent, as the polyether group, an aliphatic polyether group is more suitable than an aromatic polyether group. Among the aliphatic polyether groups, more preferred are alkyl polyether groups. Also, from the standpoint of less problems upon synthesis owing to steric hindrance, straight-chain alkyl polyether groups are more suitable than branched alkyl polyether groups. Among the straight-chain alkyl polyether groups, preferred are polyether groups comprising a straight-chain alkyl group having not more than 8 carbon atoms. In addition, when water is used as an eluent, in view of good dispersibility in water, a polyethylene glycol group or a polypropylene glycol group is preferred, and a polyethylene glycol group is more preferred.

The number of ether bonds in the polyether group is usually in the range of 1 to 30, preferably 2 to 20, and more preferably 3 to 15, from the standpoints of good dispersibility in an aqueous solvent and good durability of the resulting coating layer. When the number of ether bonds in the polyether group is excessively small, the polyether group-containing silicone compound tends to be deteriorated in dispersibility. On the other hand, when the number of ether bonds in the polyether group is excessively large, the polyether group-containing silicone compound tends to cause deterioration in durability or releasing properties of the resulting film.

In the case where the polyether group of the polyether group-containing silicone compound is located at a side chain or a terminal end of the silicone, the terminal end of the polyether group is not particularly limited, and may include various functional groups such as a hydroxyl group, an amino group, a thiol group, a hydrocarbon group such as an alkyl group and a phenyl group, a carboxyl group, a sulfonic group, an aldehyde group, an acetal group, etc. Of these functional groups, in view of good dispersibility in water and good crosslinking properties for enhancing strength of the resulting coating layer, preferred are a hydroxyl group, an amino group, carboxyl group and a sulfonic group, and more preferred is a hydroxyl group.

The content of the polyether group in the polyether group-containing silicone compound in terms of a molar ratio thereof as calculated assuming that a molar amount of a siloxane bond in the silicone is 1, is preferably in the range of 0.001 to 0.30%, more preferably 0.01 to 0.20%, even more preferably 0.03 to 0.15%, and further even more preferably 0.05 to 0.12%. When adjusting the content of the polyether group to the above-specified range, it is possible to maintain good dispersibility of the compound in water as well as good durability and releasing properties of the resulting coating layer.

The molecular weight of the polyether group-containing silicone compound is preferably not so large in view of good dispersibility in an aqueous solvent, whereas the molecular weight of the polyether group-containing silicone compound is preferably large in view of good durability or releasing performance of the resulting coating layer. It has been demanded to achieve good balance between both of the aforementioned properties, i.e., between the dispersibility in an aqueous medium and the durability or releasing performance. The number-average molecular weight of the polyether group-containing silicone compound is preferably in the range of 1000 to 100000, more preferably 3000 to 30000, and even more preferably 5000 to 10000.

In addition, in view of deterioration in the coating layer with time and good releasing performance thereof as well as decontamination properties in various respective steps, the amount of low-molecular weight components (those having a number-average molecular weight of not more than 500) in the silicone compound is preferably as small as possible. The content of the low-molecular weight components in the silicone compound is preferably in the range of not more than 15% by weight, more preferably not more than 10% by weight, and even more preferably not more than 5% by weight based on a whole amount of the silicone compound. When using the condensation type silicone, if the vinyl group bonded to silicon (vinyl silane) or the hydrogen group bonded to silicon (hydrogen silane) remains unreacted as such in the coating layer, the resulting coating layer tends to suffer from deterioration in various properties with time. Therefore, it is preferred that the content of the functional groups in the silicone compound is not more than 0.1 mol%, and it is more preferred that the silicone compound comprises none of the functional groups.

Since it is difficult to apply the polyether group-containing silicone compound solely, the polyether group-containing silicone compound is preferably used in the form of a dispersion thereof in water. In order to disperse the polyether group-containing silicone compound in water, there may be used various conventionally known dispersants. Examples of the dispersants include an anionic dispersant, a nonionic dispersant, a cationic dispersant and an amphoteric dispersant. Of these dispersants, in view of good dispersibility of the polyether group-containing silicone compound and good compatibility thereof with a polymer other than the polyether group-containing silicone compound which is used for forming the coating layer, preferred are an anionic dispersant and a nonionic dispersant. As the dispersant, there may also be used a fluorine compound.

Examples of the anionic dispersant include sulfonic acid salts and sulfuric acid ester salts such as sodium dodecylbenzenesulfonate, sodium alkylsulfonates, sodium alkylnaphthalenesulfonates, sodium dialkylsulfosuccinates, sodium polyoxyethylene alkylethersulfates, sodium polyoxyethylene alkylallylethersulfates and polyoxyalkylene alkenylethersulfuric acid ammonium salts; carboxylic acid salts such as sodium laurate and potassium oleate; and phosphoric acid salts such as alkyl phosphoric acid salts, polyoxyethylene alkyl ether phosphoric acid salts and polyoxyethylene alkyl phenyl ether phosphoric acid salts. Of these anionic dispersants, from the standpoint of good dispersibility, preferred are sulfonic acid salts.

Examples of the nonionic dispersant include ether-type nonionic dispersants obtained by adding an alkyleneoxide such as ethyleneoxide and propyleneoxide to a hydroxyl group-containing compound such as a higher alcohol and an alkyl phenol, ester-type nonionic dispersants obtained by an ester bond between a polyhydric alcohol such as glycerol and sugars, and a fatty acid, ester-ether-type nonionic dispersants obtained by adding an alkyleneoxide to a fatty acid or a polyhydric alcohol fatty acid ester, amide-type nonionic dispersants obtained by an amide bond between a hydrophobic group and a hydrophilic group, etc. Of these nonionic dispersants, in view of good solubility in water and good safety, preferred are ether-type nonionic dispersants, and in view of good handling properties, more preferred are nonionic dispersants of the type obtained by adding ethyleneoxide thereto.

The amount of the dispersant used may vary depending upon the molecular weight and structure of the polyether group-containing silicone compound used as well as the kind of dispersant used, and therefore is not particularly limited. However, the amount of the dispersant is controlled, as a measure, such that the weight ratio thereof to the polyether group-containing silicone compound as calculated assuming that the amount of the polyether group-containing silicone compound is 1, is preferably in the range of 0.01 to 0.5, more preferably 0.05 to 0.4, and even more preferably 0.1 to 0.3.

The above wax includes those waxes selected from natural waxes, synthetic waxes and mixtures of these waxes. Examples of the natural waxes include vegetable waxes, animal waxes, mineral waxes and petroleum waxes. Specific examples of the vegetable waxes include candelilla waxes, carnauba waxes, rice waxes, haze waxes and jojoba oils. Specific examples of the animal waxes include beeswaxes, lanolin and spermaceti waxes. Specific examples of the mineral waxes include montan waxes, ozokerite and ceresin. Specific examples of the petroleum waxes include paraffin waxes, microcrystalline waxes and petrolatum. Specific examples of the synthetic waxes include synthetic hydrocarbons, modified waxes, hydrogenated waxes, fatty acids, acid amides, amines, imides, esters and ketones. As the synthetic hydrocarbons, there may be mentioned Fischer-Tropsch waxes (alias: Sasol Wax), polyethylene waxes or the like. In addition, those polymers having a low molecular weight (specifically, those polymers having a viscosity number-average molecular weight of 500 to 20000) are also included in the synthetic hydrocarbons. Specific examples of the synthetic hydrocarbons include polypropylene, ethylene-acrylic acid copolymers, polyethylene glycol, polypropylene glycol, and blocked or grafted combined products of polyethylene glycol and polypropylene glycol. Specific examples of the modified waxes include montan wax derivatives, paraffin wax derivatives and microcrystalline wax derivatives. The derivatives as used herein mean compounds obtained by subjecting the respective waxes to any treatment selected from refining, oxidation, esterification and saponification, or combination of these treatments. Specific examples of the hydrogenated waxes include hardened castor oils and hardened castor oil derivatives.

Of these waxes, in view of well stabilized properties thereof, preferred are the synthetic waxes, more preferred are polyethylene waxes, and even more preferred are polyethylene oxide waxes. The molecular weight of the synthetic waxes is preferably in the range of 500 to 30000, more preferably 1000 to 15000, even more preferably 2000 to 8000, from the standpoints of good stabilization of properties such as anti-blocking properties and good handling properties.

Next, in the case where the second coating layer is in the form of a coating layer comprising an antistatic agent, the antistatic agent incorporated in the second coating layer is not particularly limited, and there may be used conventionally known antistatic agents. Among them, in view of good heat resistance and wet heat resistance of the resulting film, preferred are polymer-type antistatic agents. Examples of the polymer-type antistatic agents include an ammonium group-containing compound, a polyether compound, a sulfonic group-containing compound, a betaine compound and a conductive polymer.

The ammonium group-containing compound means a compound comprising an ammonium group in a molecule thereof. Examples of the ammonium group-containing compound include various ammonium compounds such as an aliphatic amine, an alicyclic amine and an aromatic amine. Of these ammonium group-containing compounds, preferred are polymer-type ammonium group-containing compounds, and the ammonium group is preferably incorporated not as a counter ion but into a main chain or side chain of the polymer. For example, as the ammonium group-containing compound, there may be mentioned and suitably used those ammonium group-containing high-molecular weight compounds as polymers obtained by polymerizing a monomer comprising an addition-polymerizable ammonium group or a precursor of the ammonium group such as an amine. The polymers may be in the form of a homopolymer produced by polymerizing the monomer comprising an addition-polymerizable ammonium group or a precursor of the ammonium group such as an amine solely or a copolymer produced by copolymerizing the above monomer with the other monomer.

Among the ammonium group-containing compounds, from the standpoints of excellent antistatic properties and wet heat stability of the resulting film, preferred are polymers having the structure represented by the following formula (1). The polymers as the ammonium group-containing compounds may be in the form of a homopolymer or a copolymer, as well as a copolymer of the compound with a plurality of the other components.

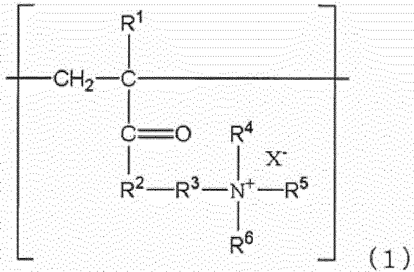

For example, in the above formula (1), the substituent group R¹ is a hydrogen atom or a hydrocarbon group such as an alkyl group having 1 to 20 carbon atoms and a phenyl group; R² is -O-, -NH- or -S-; R³ is an alkylene group having 1 to 20 carbon atoms or the other structure capable of establishing the structure represented by the above formula (1); R⁴, R⁵ and R⁶ are each independently a hydrogen atom, a hydrocarbon group such as an alkyl group having 1 to 20 carbon atoms and a phenyl group, or a hydrocarbon group to which a functional group such as a hydroxyalkyl group is added; and X-represents various counter ions.

Among them, in particular, from the standpoints of excellent antistatic properties and wet heat stability of the resulting film, in the above formula (1), the substituent R¹ is preferably a hydrogen atom or an alkyl group having 1 to 6 carbon atoms; R³ is preferably an alkyl group having 1 to 6 carbon atoms; and R⁴, R⁵ and R⁶ are preferably each independently a hydrogen atom or an alkyl group having 1 to 6 carbon atoms, and it is more preferable that any one of R⁴, R⁵ and R⁶ is a hydrogen atom, and the other substituent groups are each an alkyl group having 1 to 4 carbon atoms.

In addition, as the ammonium group-containing compound, pyrrolidinium ring-containing compounds are also preferably used from the standpoints of excellent antistatic properties and heat resistance/stability of the resulting film.

The two substituent groups bonded to a nitrogen atom of the pyrrolidinium ring-containing compounds are each independently an alkyl group or a phenyl group. The alkyl group or phenyl group may be substituted with the following group. Examples of the substituent group that can be bonded to the alkyl group or phenyl group include a hydroxyl group, an amide group, an ester group, an alkoxy group, a phenoxy group, a naphthoxy group, a thioalkoxy group, a thiophenoxy group, a cycloalkyl group, a trialkyl ammonium alkyl group, a cyano group, and a halogen atom. Also, the two substituent groups bonded to the nitrogen atom may be chemically bonded to each other. Examples of the substituent groups include -(CH₂)ₘ- (m = integer of 2 to 5), -CH(CH₃)CH(CH₃)-, -CH=CH-CH=CH-, -CH=CH-CH=N-, -CH=CH-N=C-, - CH₂OCH₂-, -(CH₂)₂O(CH₂)₂- and the like.

In the present invention, the pyrrolidinium ring-containing polymer may be produced by subjecting a diallylamine derivative to cyclic polymerization using a radical polymerization catalyst. The cyclic polymerization may be carried out in a solvent such as water or a polar solvent such as methanol, ethanol, isopropanol, formamide, dimethylformamide, dioxane and acetonitrile using a polymerization initiator such as hydrogen peroxide, benzoyl peroxide and tertiary butyl peroxide by known methods, though not particularly limited thereto. In the present invention, a compound having a carbon-carbon unsaturated bond that is polymerizable with the diallylamine derivative may be used as a comonomer component.

Examples of an anion as a counter ion of the ammonium group of the aforementioned ammonium group-containing compound include various ions such as a halogen ion, a sulfonate ion, a phosphate ion, a nitrate ion, an alkyl sulfonate ion and a carboxylate ion.

Also, the number-average molecular weight of the ammonium group-containing compound is 1000 to 500000, preferably 2000 to 350000, and more preferably 5000 to 200000. When the number-average molecular weight of the ammonium group-containing compound is less than 1000, the resulting coating film tends to be insufficient in strength or tends to be deteriorated in heat resistance/stability. On the other hand, when the number-average molecular weight of the ammonium group-containing compound is more than 500000, the coating solution tends to have an excessively high viscosity, and therefore tends to be deteriorated in handling properties and coatability.

Examples of the polyether compound include polyethyleneoxides, polyetheresteramides, acrylic resins comprising polyethylene glycol on a side chain thereof, and the like.

The sulfonic group-containing compound means a compound comprising sulfonic acid or a sulfonic acid salt in a molecule thereof. As the sulfonic group-containing compound, there may be suitably used compounds in which a large amount of sulfonic acid or a sulfonic acid salt is present, such as polystyrene sulfonic acid.

Examples of the conductive polymer include polythiophene-based polymers, polyaniline-based polymers, polypyrrole-based polymers, polyacetylene-based polymers, etc. Among these conductive polymers, there may be suitably used polythiophene-based polymers such as polymers in which poly(3,4-ethylenedioxythiophene) is used in combination of polystyrene sulfonic acid. The conductive polymers are more suitably used as compared to the aforementioned other antistatic agents, because they have a low resistivity. However, on the other hand, it is necessary to take any measures such as reduction in amount of the conductive polymers used, if the conductive polymers are used in the applications in which coloration and increased costs should be avoided.

In addition, upon forming the second coating layer, in order to improve an appearance of the resulting coating layer and reduce a surface resistance thereof, it is possible to use polyol compounds or polyether compounds such as polyalkyleneoxides, glycerol, polyglycerol, and alkyleneoxide adducts of glycerol or polyglycerol in combination with the aforementioned compounds.

The preferred polyalkyleneoxides or derivatives thereof are compounds having an ethyleneoxide structure or a propyleneoxide structure. If the alkyl group in the alkyleneoxide structure has an excessively long chain, the resulting polyalkyleneoxides or derivatives thereof tend to exhibit an excessively strong hydrophobicity and therefore tend to be deteriorated in uniform dispersibility in a coating solution, so that the resulting coating layer tends to be deteriorated in antistatic properties. Of these polyalkyleneoxides or derivatives thereof, preferred is polyethyleneoxide, and more preferred is polyethyleneoxide having a weight-average molecular weight of 200 to 2000.

The polyglycerol means a compound obtained by polymerizing two or more glycerol molecules, and the degree of polymerization of the polyglycerol is preferably in the range of 2 to 20. When using glycerol, the resulting coating layer tends to be slightly deteriorated in transparency.

The alkyleneoxide adduct of glycerol or polyglycerol means compounds having such a structure in which an alkyleneoxide or a derivative thereof is added to a hydroxyl group of glycerol or polyglycerol.

In this case, the structures of the alkyleneoxides or the derivatives thereof which are added to the respective hydroxyl groups of glycerol or polyglycerol may be different from each other. In addition, the alkyleneoxide or the derivative thereof may be added to at least one hydroxyl group of glycerol or polyglycerol, and it is not necessary that the alkyleneoxide or the derivative thereof is added to all of hydroxyl groups of glycerol or polyglycerol.

As the alkyleneoxide or the derivative thereof which is added to glycerol or polyglycerol, preferred are compounds having an ethyleneoxide structure or a propyleneoxide structure. When the length of the alkyl chain in the alkyleneoxide structure is excessively large, the resulting compound tends to exhibit an excessively strong hydrophobicity and therefore tends to be deteriorated in uniform dispersibility in a coating solution, so that the resulting coating layer tends to be deteriorated in antistatic properties and transparency. Of these alkyleneoxides or derivatives thereof, particularly preferred is ethyleneoxide. In addition, the number of the alkyleneoxides or the derivatives thereof to be added to glycerol or polyglycerol is controlled such that the number-average molecular weight of the finally obtained product is preferably in the range of 250 to 2000, and more preferably 300 to 1000.

Further, the second coating layer may have various configurations comprising a release agent in combination with an antistatic agent, such as the second coating layer comprising a release agent into which an antistatic agent is incorporated in order to impart dust and dirt-deposition preventing properties thereto, or the second coating layer comprising an antistatic agent into which a release agent is incorporated in order to impart good decontamination properties to the surface thereof, reduce occurrence of blocking against the first coating layer and improve scratch resistance thereof.

Upon forming the second coating layer, in order to improve appearance or transparency of the resulting coating layer and well control slipping properties thereof, it is possible to use various polymers such as polyester resins, acrylic resins and urethane resins as well as crosslinking agents used for forming the first coating layer in combination with the aforementioned components. In particular, from the standpoints of strengthening the coating layer and reducing occurrence of blocking therein, it is preferred to use a melamine compound, an oxazoline compound, an isocyanate-based compound and an epoxy compound in combination with the aforementioned components. Of these compounds, particularly preferred is the melamine compound.

Also, it is possible to incorporate particles into the second coating layer for the purpose of improving anti-blocking properties and slipping properties of the resulting coating layer unless the subject matter of the present invention is adversely influenced by addition of the particles.

Further, upon forming the first coating layer and the second coating layer, it is also possible to use various additives such as a defoaming agent, a coatability improver, a thickening agent, an organic lubricant, an antistatic agent, an ultraviolet absorber, an antioxidant, a foaming agent, a dye and a pigment, if required, in combination with the aforementioned components, unless the subject matter of the present invention is adversely affected by addition of these additives.

Although it is essential to use the resin having a glass transition point of not higher than 0°C as a main component of the first coating layer constituting the coated film of the present invention, the content of the resin in the first coating layer is in the range of not less than 50% by weight, preferably not less than 65% by weight, more preferably not less than 75% by weight, and even more preferably not less than 85% by weight. The upper limit of a preferred range of the content of the resin in the first coating layer is 99% by weight. When the content of the resin in the first coating layer is out of the above-specified range, it is not possible to attain sufficient adhesion properties of the resulting coating layer.

The content of the epoxy compound in the first coating layer constituting the coated film of the present invention is in the range of not more than 50% by weight, preferably not more than 40% by weight, and more preferably not more than 30% by weight. When using the epoxy compound in the above-specified range, it is possible to readily attain good strength and adhesion properties of the resulting coating film.

The content of the crosslinking agents other than the epoxy compound in the first coating layer constituting the coated film of the present invention is in the range of not more than 30% by weight, preferably not more than 20% by weight, and more preferably not more than 10% by weight. When using the crosslinking agents other than the epoxy compound in the above-specified range, it is possible to readily attain good strength and well-controlled adhesion properties of the resulting coating film. However, there tends to occur such a fear that the coating layer is deteriorated in adhesion properties depending upon materials or composition used in the coating layer. Therefore, in some cases, it is preferred to use none of the crosslinking agents other than the epoxy compound in the coating layer.

In the coated film of the present invention, in the case where a release agent is incorporated into the second coating layer mainly for the purpose of reducing occurrence of blocking of the film, the content of the release agent in the second coating layer is not particularly limited since an appropriate amount of the release agent to be used in the second coating layer may vary depending upon the kind of release agent incorporated therein, and is preferably in the range of not less than 3% by weight, more preferably not less than 15% by weight, and even more preferably 25 to 99% by weight. When the content of the release agent in the second coating layer is less than 3% by weight, occurrence of blocking in the resulting film tends to be hardly reduced sufficiently.

In the case where the long-chain alkyl compound or fluorine compound is used as the release agent, the content of the long-chain alkyl compound or fluorine compound in the second coating layer is preferably in the range of not less than 5% by weight, more preferably 15 to 99% by weight, even more preferably 25 to 95% by weight, and further even more preferably 40 to 90% by weight. When using the long-chain alkyl compound or fluorine compound in the above-specified range, it is possible to effectively reduce occurrence of blocking in the resulting film. Also, in such a case, the content of the crosslinking agents in the second coating layer is preferably in the range of not more than 95% by weight, more preferably 1 to 80% by weight, even more preferably 5 to 70% by weight, and further even more preferably 10 to 50% by weight. As the crosslinking gents, there are preferably used a melamine compound and an isocyanate-based compound (among them, particularly preferred are blocked isocyanates obtained by blocking isocyanates with an active methylene-based compound), and more preferred is the melamine compound from the standpoint of reducing occurrence of blocking in the resulting film.

When using a condensation-type silicone compound as the release agent, the content of the condensation-type silicone compound in the second coating layer is preferably in the range of not less than 3% by weight, more preferably 5 to 97% by weight, even more preferably 8 to 95% by weight, and further even more preferably 10 to 90% by weight. When using the condensation-type silicone compound in the above-specified range, it is possible to effectively reduce occurrence of blocking in the resulting film. Also, in such a case, the content of the crosslinking agents in the second coating layer is preferably in the range of not more than 97% by weight, more preferably 3 to 95% by weight, even more preferably 5 to 92% by weight, and further even more preferably 10 to 90% by weight. As the crosslinking gents, there is preferably used a melamine compound from the standpoint of reducing occurrence of blocking in the resulting film.

When using an addition-type silicone compound as the release agent, the content of the addition-type silicone compound in the second coating layer is preferably in the range of not less than 5% by weight, more preferably not less than 25% by weight, even more preferably not less than 50% by weight, and further even more preferably not less than 70% by weight. The upper limit of a preferred range of the content of the addition-type silicone compound in the second coating layer is 99% by weight, and more preferably 90% by weight. When using the addition-type silicone compound in the above-specified range, it is possible to effectively reduce occurrence of blocking in the resulting film, and attain a good appearance of the coating layer.

When using a wax as the release agent, the content of the wax in the second coating layer is preferably in the range of not less than 10% by weight, more preferably 20 to 90% by weight, and even more preferably 25 to 70% by weight. When using the wax in the above-specified range, it is possible to effectively reduce occurrence of blocking in the resulting film. Also, in such a case, the content of the crosslinking agents in the second coating layer is preferably in the range of not more than 90% by weight, more preferably 10 to 70% by weight, and even more preferably 20 to 50% by weight. As the crosslinking gents, there is preferably used a melamine compound from the standpoint of reducing occurrence of blocking in the resulting film.

In the coated film of the present invention, in the case where an antistatic agent is incorporated into the second coating layer mainly for the purpose of imparting an antistatic performance to the second coating layer to reduce deposition of dirt and dusts thereon owing to peeling electrification or frictional electrification, the content of the antistatic agent in the second coating layer is not particularly limited since an appropriate amount of the antistatic agent used in the second coating layer may vary depending upon the kind of antistatic agent incorporated therein, and is usually in the range of not less than 0.5% by weight, preferably 3 to 90% by weight, more preferably 5 to 70% by weight, and even more preferably 8 to 60% by weight. When the content of the antistatic agent in the second coating layer is less than 0.5% by weight, the resulting coated film tends to be insufficient in antistatic effect as well as effect of preventing deposition of dirt and dusts thereon.

In the case where an antistatic agent other than the conductive polymer is used as the above antistatic agent, the content of the antistatic agent other than the conductive polymer in the second coating layer is usually in the range of not less than 5% by weight, preferably 10 to 90% by weight, more preferably 20 to 70% by weight, and even more preferably 25 to 60% by weight. When the content of the antistatic agent other than the conductive polymer in the second coating layer is less than 5% by weight, the resulting coated film tends to be insufficient in antistatic effect as well as effect of preventing deposition of dirt and dusts thereon.

In the case where the conductive polymer is used as the above antistatic agent, the content of the conductive polymer in the second coating layer is usually in the range of not less than 0.5% by weight, preferably 3 to 70% by weight, more preferably 5 to 50% by weight, and even more preferably 8 to 30% by weight. When the content of the conductive polymer in the second coating layer is less than 0.5% by weight, the resulting coated film tends to be insufficient in antistatic effect as well as effect of preventing deposition of dirt and dusts thereon.

In the case where good antistatic performance is imparted to the resulting coated film, the content of the release agent in the second coating layer is not particularly limited since an appropriate amount of the release agent used in the second coating layer may vary depending upon the kind and aimed performance of release agent incorporated therein, and is preferably in the range of 1 to 80% by weight, more preferably 3 to 70% by weight, and even more preferably 5 to 60% by weight. When using the release agent in the above-specified range, it is possible to obtain the effects of enhancing decontamination properties on the surface of the second coating layer, reducing occurrence of blocking against the first coating layer and improving scratch resistance of the second coating layer.

In the case where good antistatic performance is imparted to the second coating layer, the content of the crosslinking agents in the second coating layer is preferably in the range of not more than 80% by weight, more preferably 5 to 60% by weight, and even more preferably 10 to 50% by weight.

The analysis of the components in the coating layer may be conducted, for example, by analysis methods such as TOF-SIMS, ESCA, fluorescent X-ray analysis and IR.

Upon forming the coating layer, the coated film is preferably produced by the method in which a solution or a solvent dispersion comprising a series of the above-mentioned compounds is prepared as a coating solution having a concentration of about 0.1 to about 80% by weight in terms of a solid content thereof, and the thus prepared coating solution is applied onto the polyester film. In particular, in the case where the coating layer is formed by an in-line coating method, the coating solution is preferably used in the form of an aqueous solution or a water dispersion. The coating solution may also comprise a small amount of an organic solvent for the purpose of improving dispersibility in water, film-forming properties or the like. In addition, the organic solvents may be used alone, or may be appropriately used in combination of any two or more thereof.

In the coated film according to the present invention, the thickness of the first coating layer formed on the polyester film is in the range of 0.01 to 3 µm, preferably 0.03 to 3 µm, more preferably 0.05 to 3 µm, even more preferably 0.08 to 1.5 µm, and further even more preferably 0.15 to 0.90 µm. When the thickness of the first coating layer used lies within the above-specified range, the resulting film can readily maintain adequate adhesion properties and anti-blocking properties. Also, the thickness of the second coating layer formed on the polyester film is preferably in the range of 0.01 to 1 µm, more preferably 0.01 to 0.5 µm, and even more preferably 0.02 to 0.2 µm. When the thickness of the second coating layer used lies within the above-specified range, the resulting film can be readily improved in anti-blocking properties as well as antistatic performance, and exhibit a good coating appearance.

In the film of the present invention, as the method of forming the coating layer, there may be used conventionally known coating methods such as a gravure coating method, a reverse roll coating method, a die coating method, an air doctor coating method, a blade coating method, a rod coating method, a bar coating method, a curtain coating method, a knife coating method, a transfer roll coating method, a squeeze coating method, an impregnation coating method, a kiss coating method, a spray coating method, a calender coating method, an extrusion coating method, and the like.

In the present invention, the drying and curing conditions used upon forming the coating layer on the polyester film are not particularly limited. The temperature upon drying the solvent used in the coating solution, such as water, is preferably in the range of 70 to 150°C, more preferably 80 to 130°C, and even more preferably 90 to 120°C. The drying time is in the range of 3 to 200 sec as a measure, and preferably 5 to 120 sec. In addition, in order to improve releasing performance and strength of the coating layer, in the film production process, the coating layer is subjected to heat-setting treatment step at a temperature of preferably 180 to 270°C, more preferably 200 to 250°C, and even more preferably 210 to 240°C. The time of the heat-setting treatment step is in the range of 3 to 200 sec as a measure, and preferably 5 to 120 sec.

In addition, the heat-setting treatment may be used in combination with irradiation with active energy rays such as irradiation with ultraviolet rays, if required. The polyester film constituting the coated film of the present invention may be previously subjected to surface treatments such as corona treatment and plasma treatment.

The haze of the polyester film used in the present invention is not particularly limited. For example, in the case where the film of the present invention is used in the applications such as a polarizing plate to which strict inspection conditions are applied, it is important that the film has high transparency to inspection light in order to conduct the inspection with a much higher accuracy, and therefore the haze of the film is preferably low. When using the film in the aforementioned applications, the haze of the film is preferably in the range of not more than 5.0%, more preferably not more than 3.0%, even more preferably not more than 2.0%, and further even more preferably 0.2 to 1.5%.

The adhesion strength of the first coating layer used in the present invention against the polyester film having no coating layer is preferably in the range of not less than 3 mN/cm, more preferably not less than 10 mN/cm, and even more preferably not less than 30 mN/cm. The upper limit of a preferred range of the adhesion strength of the first coating layer is 2000 mN/cm, and more preferably 500 mN/cm. When controlling the adhesion strength of the first coating layer to the above-specified range, the resulting coated film can exhibit more adequate adhesion properties, as well as good handling properties.

The surface resistivity of the second coating layer used in the present invention for imparting good antistatic properties to the film is preferably in the range of not more than 1 x 10¹² Ω, more preferably not more than 1 x 10¹¹ Ω, and even more preferably not more than 5 x 10¹⁰ Ω. When controlling the surface resistivity of the second coating layer to the above-specified range, it is possible to provide the film that hardly suffers from deposition of dirt and dusts thereon.

In addition, as one of the methods of improving anti-blocking properties against the first coating layer side, the surface of the film opposed to its surface on which the first coating layer of the present invention is formed may be roughened. When forming the second coating layer on the film, the arithmetic average roughness (Sa) of the surface of the film on the side opposed to the first coating layer is preferably in the range of not less than 5 nm, more preferably not less than 10 nm, and even more preferably not less than 30 nm. Although the upper limit of the arithmetic average roughness (Sa) is not particularly limited, the upper limit of a preferred range of the arithmetic average roughness (Sa) is 300 nm from the standpoint of good transparency of the resulting film. Meanwhile, in the case where the second coating layer has a good release force, the influence of the second coating layer is predominant and the influence of Sa is low, and therefore the small Sa value has no significant problem. However, in the case where the second coating layer has a poor release force, the influence of Sa tends to be increased.

### Examples

The present invention is described in more detail below by Examples. However, these Examples are only illustrative and not intended to limit the present invention thereto, and other changes or modifications are also possible unless they depart from the scope of the present invention. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter (d50; µm):

Using a centrifugal precipitation type particle size distribution measuring apparatus "SA-CP3 Model" manufactured by Shimadzu Corp., the particle size corresponding to a cumulative fraction of 50% (on a weight basis) in equivalent spherical distribution of the particles was measured as an average particle diameter of the particles.

### (3) Method of measuring arithmetic average roughness (Sa):

The surface of the film obtained in the below-mentioned respective Examples and Comparative Examples was measured for a surface roughness on the side of the second coating layer thereof using a non-contact surface/layer section profile measuring system "VertScan (registered trademark) R550GML" manufactured by Ryoka Systems Inc., under the following conditions: CCD camera: "SONY HR-501/3"'; objective lens, magnification: 20 times; lens barrel: "1X Body"; zoom lens: "No Relay"; wavelength filter: "530 white"; measuring mode: Wave, and the value outputted by correction according to a 4th-order polynomial was used as the arithmetic average roughness (Sa).

### (4) Method of measuring thickness of coating layer:

The surface of the coating layer was dyed with RuO₄, and the resulting film was embedded in an epoxy resin. Thereafter, the resin-embedded film was cut into a piece by an ultrathin sectioning method, and the cut piece was dyed with RuO₄ to observe and measure a cut section of the coating layer using TEM ("H-7650" manufactured by Hitachi High-Technologies; accelerated voltage: 100 V). Meanwhile, the measurement of the thickness of the coating layer was carried out at a portion of the film in which no particles were present.

### (5) Glass transition point:

Using a differential scanning calorimeter (DSC) "8500" manufactured by PerkinElmer Japan Co., Ltd., the glass transition point was measured in a temperature range of -100 to 200°C at a temperature rise rate of 10°C/min.

### (6) Method of measuring number-average molecular weight:

The measurement of the molecular weight was conducted using a GPC apparatus "HLC-8120GPC" manufactured by Tosoh Corp. The number-average molecular weight was calculated in terms of polystyrene.

### (7) Determination of functional group of silicone:

Using NMR "AVANCE III600" manufactured by Bruker BioSpin K.K., the polyether group containing silicone was subjected to assignment of the respective peaks of 1H-NMR to determine amounts of dimethyl siloxane and polyether group and confirm whether or not vinyl silane or hydrogen silane was present therein.

### (8) Method of measuring haze:

Using a haze meter "HM-150" manufactured by Murakami Color Research Laboratory Co., Ltd., the haze was measured according to JIS K 7136.

### (9) Method of evaluating adhesion strength:

The surface of the first coating layer of the coated film having a width of 5 cm was attached onto the surface of the polyester film obtained in the below-mentioned Comparative Example 1 on which no coating layer was formed, and a 2 kg rubber roller having a width of 5 cm was moved over the coated film by one reciprocative motion to press-bond the coated film onto the polyester film. The resulting laminate was allowed to stand at room temperature for 1 hr to measure a peel force of the coated film. The measurement of the peel force was conducted by 180° peel test at an elastic stress rate of 300 mm/min using "Ezgraph" manufactured by Shimadzu Corporation.

### (10) Method of evaluating adhesion properties of coating layer (adhesion 1):

One sheet of the A4 size coated film was folded such that portions of the first coating layer thereof were overlapped on each other and held in the overlapped state by pressing the film with fingers to evaluate adhesion properties thereof. The evaluation ratings of the adhesion properties are as follows.
5 Points: Merely when lightly pressing the folded film with fingers, the film could be kept in an attached and rounded state even after releasing the fingers therefrom;
4 Points: When strongly pressing the folded film with fingers, the film could be kept in an attached and rounded state after releasing the fingers therefrom;
3 Points: When strongly pressing the folded film with fingers, the film could be kept in an attached and rounded state after releasing the fingers therefrom, but the attached and rounded state of the film was eliminated within 3 sec;
2 Points: When strongly pressing the folded film with fingers, the film exhibited merely slight adhesion properties, and could not be held at all in an attached and rounded state; and
1 Point: Even when strongly pressing the folded film with fingers, the film exhibited no adhesion properties.

Upon practical use, 3 or more points are preferred.

### (11) Method of evaluating adhesion properties of coating layer (adhesion 2):

One sheet of the A4 size coated film was overlapped with the A4 size polyester film obtained in the below-mentioned Comparative Example 1 on which no coating layer was formed, such that the first coating layer-side surface of the coated film was faced and overlapped onto the polyester film, and both the films were pressed with fingers to evaluate adhesion properties thereof. The evaluation ratings of the adhesion properties are as follows.
5 Points: Merely when lightly pressing the films with fingers, both the films could be adhered to each other and held in such an adhered state by supporting the film having the first coating layer only;
4 Points: When strongly pressing the films with fingers, both the films could be adhered to each other and held in such an adhered state by supporting the film having the coating layer only;
3 Points: When strongly pressing the films with fingers, both the films could be adhered to each other and held in such an adhered state by supporting the film having the coating layer only, but the films was peeled off within 3 sec;
2 Points: When strongly pressing the films with fingers, the films exhibited slight adhesion properties therebetween, but the adhered condition between the films could not be held; and
1 Point: Even when strongly pressing the films with fingers, the films exhibited no adhesion properties.

Upon practical use, 2 or more points are preferred.

### (12) Method of evaluating reworkability of first coating layer:

In the aforementioned evaluation methods (10) and (11), after peeling the film to be evaluated, the film was subjected again to the same procedure as described above at the same position of the film. The evaluation ratings of the reworkability are as follows.
A: The same evaluation results were attained; and
B: The film was deteriorated in adhesion properties.

### (13) Method of evaluating adhesive residue of first coating layer:

In the aforementioned evaluation method (11), a portion of the polyester film from which the coated film was peeled off was observed to examine whether or not any adhesive residue (traces of transfer of the coating layer) was present thereon. The evaluation ratings of the adhesive residue are as follows.
A: No adhesive residue (traces of transfer of the coating layer) was present; and
B: Adhesive residue was present.

### (14) Method of measuring anti-blocking properties:

The two polyester films to be measured were prepared and overlapped on each other such that the first coating layer side of one polyester film was faced to the second coating layer side of the other polyester film. The area of 12 cm x 10 cm of the obtained laminate was pressed at 40°C and 80% RH under 10 kg/cm² for 20 hr. Thereafter, the films were peeled off from each other by the method as prescribed in ASTM D1893 to measure a delamination load between the films.

As the delamination load is reduced, the film suffers from less occurrence of blocking and therefore can exhibit good anti-blocking properties. The delamination load of the film is preferably in the range of not more than 100 g/cm, more preferably not more than 50 g/cm, even more preferably not more than 30 g/cm, further even more preferably not more than 20 g/cm, and most preferably not more than 10 g/cm. Meanwhile, the film showing a delamination load of more than 300 g/cm in the present evaluation, the film being broken during the evaluation or the film that apparently suffers from blocking by pressing is not practically usable, and therefore these films are evaluated and expressed by the mark "-".

### (15) Method of measuring surface resistivity of second coating layer:

According to the method described in the following item (15-1), the surface resistivity of the second coating layer was measured. Since the surface resistivity of less than 1 x 10⁸ Ω was unmeasurable by the method described in the item (15-1), the sample whose surface resistivity was unmeasurable by the method described in the item (15-1) was measured for its surface resistivity by the method described in the item (15-2).
(15-1) Using a high resistance meter "HP4339B" and a measuring electrode "HP16008B" both manufactured by Hewlett Packard Japan Ltd., after the polyester film was fully moisture-controlled in a measuring atmosphere of 23°C and 50% RH, a voltage of 100 V was applied to the film for 1 min, and then the surface resistivity of the second coating layer of the film was measured.
(15-2) Using a low resistance meter "LORESTA GP MCP-T600" manufactured by Mitsubishi Chemical Analytech Co., Ltd., after the sample was moisture-controlled in a measuring atmosphere of 23°C and 50% RH for 30 min, the surface resistivity of the second coating layer of the sample was measured.

### (16) Method of evaluating adhesion of dirt and dusts onto second coating layer side:

The polyester film was fully moisture-controlled in a measuring atmosphere of 23°C and 50% RH, and then the second coating layer of the film was rubbed with cotton cloth by 10 reciprocative motions. The thus rubbed second coating layer of the film was slowly approached to finely crushed tobacco ash to evaluate adhesion of the ash thereonto according to the following evaluation ratings.
A: No adhesion of ash onto the film occurred even when contacted with the ash;
B: Slight adhesion of ash onto the film occurred when contacted with the ash; and
C: A large amount of ash was adhered onto the film even when approached to the ash.

### (17) Method of evaluating wet heat resistance/stability on second coating layer side (amount of change in haze):

Using a haze meter "HM-150" manufactured by Murakami Color Research Laboratory Co., Ltd., the haze of the film obtained after being treated under the conditions of 50°C and 85% RH for 50 hr was measured according to JIS K 7136. The amount of change in haze of the film was obtained by subtracting a haze value of the film before being treated from a haze value of the film after being treated, and the condition of the haze of the film was evaluated according to the following ratings.
A: The amount of change in haze was not more than 0.5%;
B: The amount of change in haze was more than 0.5% but not more than 2.0%; and
C: The amount of change in haze was more than 2.0%.

### (18) Method of evaluating scratch resistance on second coating layer side:

The surface of the second coating layer of the film was scratched by fingernail to evaluate a scratch resistance thereof according to the following ratings.
A: No nail mark was present; and
B: Nail mark was present.

The polyesters used in the respective Examples and Comparative Examples were prepared by the following methods.

### <Method for producing polyester (A)>

One hundred parts by weight of dimethyl terephthalate and 60 parts by weight of ethylene glycol as well as ethyl acid phosphate and magnesium acetate tetrahydrate as a catalyst in amounts of 30 ppm and 100 ppm, respectively, based on the polyester as produced, were subjected to esterification reaction at 260°C in a nitrogen atmosphere. Successively, tetrabutyl titanate in an amount of 50 ppm based on the polyester as produced was added to the reaction solution. While heating the resulting mixture to 280°C over 2 hr and 30 min, the pressure of the reaction system was reduced to an absolute pressure of 0.3 kPa, and further the mixture was subjected to melt-polycondensation for 80 min, thereby obtaining a polyester (A) having an intrinsic viscosity of 0.63 and a diethylene glycol content of 2 mol%.

### <Method for producing polyester (B)>

One hundred parts by weight of dimethyl terephthalate and 60 parts by weight of ethylene glycol as well as magnesium acetate tetrahydrate as a catalyst in an amount of 900 ppm based on the polyester as produced, were subjected to esterification reaction at 225°C in a nitrogen atmosphere. Successively, orthophosphoric acid and germanium dioxide in amounts of 3500 ppm and 70 ppm, respectively, based on the polyester as produced, were added to the reaction solution. While heating the resulting mixture to 280°C over 2 hr and 30 min, the pressure of the reaction system was reduced to an absolute pressure of 0.4 kPa, and further the mixture was subjected to melt-polycondensation for 85 min, thereby obtaining a polyester (B) having an intrinsic viscosity of 0.64 and a diethylene glycol content of 2 mol%.

### <Method for producing polyester (C)>

The same procedure as used in the above method for producing the polyester (A) was conducted except that silica particles having an average particle diameter of 2 µm were added in an amount of 0.3 part by weight before the melt-polycondensation, thereby obtaining a polyester (C).

### <Method for producing polyester (D)>

The same procedure as used in the above method for producing the polyester (A) was conducted except that silica particles having an average particle diameter of 2.7 µm were added in an amount of 0.3 part by weight before the melt-polycondensation, thereby obtaining a polyester (D).

### <Method for producing polyester (E)>

The same procedure as used in the above method for producing the polyester (A) was conducted except that silica particles having an average particle diameter of 3.2 µm were added in an amount of 0.6 part by weight before the melt-polycondensation, thereby obtaining a polyester (E).

Examples of the compounds constituting the coating layer are as follows.

### (Examples of compounds)

### •Polyester resin: (IA)

Water dispersion of polyester resin (glass transition point: -20°C) obtained from the following composition:
Monomer composition: (acid component) dodecanedicarboxylic acid/terephthalic acid/isophthalic acid/5-sodium sulfoisophthalic acid//(diol component) ethylene glycol/1,4-butanediol = 20/38/38/4//40/60 (mol%).

### •Polyester resin: (IB)

Water dispersion of polyester resin (glass transition point: -30°C) obtained from the following composition:
Monomer composition: (acid component) dodecanedicarboxylic acid/terephthalic acid/isophthalic acid/5-sodium sulfoisophthalic acid//(diol component) ethylene glycol/1,4-butanediol = 30/33/33/4//40/60 (mol%).

### •Polyester resin: (IC)

Water dispersion of polyester resin (glass transition point: 30°C) obtained from the following composition:
Monomer composition: (acid component) terephthalic acid/isophthalic acid/5-sodium sulfoisophthalic acid//(diol component) ethylene glycol/1,4-butanediol/diethylene glycol = 40/56/4//45/25/30 (mol%).

### •Polyester resin: (ID)

Water dispersion of polyester resin obtained from the following composition:
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%).

### •Acrylic resin: (IIA)

Water dispersion of acrylic resin (glass transition point: -25°C) obtained from the following composition:
Normal butyl acrylate/methyl acrylate/2-hydroxyethyl methacrylate/acrylic acid = 72/23/3/2 (% by weight).

### •Acrylic resin: (IIB)

Water dispersion of acrylic resin (glass transition point: -40°C) obtained from the following composition:
Normal butyl acrylate/2-ethylhexyl acrylate/ethyl acrylate/2-hydroxyethyl methacrylate/acrylic acid = 30/30/36/2/2 (% by weight).

### •Acrylic resin: (IIC)

Water dispersion of acrylic resin (glass transition point: -50°C) obtained from the following composition:
2-Ethylhexyl acrylate/lauryl methacrylate/2-hydroxyethyl methacrylate/acrylic acid/methacrylic acid = 50/25/15/5/5 (% by weight).

### •Acrylic resin: (IID)

Water dispersion of acrylic resin (glass transition point: -55°C) obtained from the following composition:
2-Ethylhexyl acrylate/vinyl acetate/acrylic acid = 78/20/2 (% by weight).

### •Acrylic resin: (IIE)

Water dispersion of acrylic resin (glass transition point: -15°C) obtained from the following composition:
Normal butyl acrylate/ethyl acrylate/methyl methacrylate/acrylic acid = 45/23/30/2 (% by weight).

### •Acrylic resin: (IIF)

Water dispersion of acrylic resin (glass transition point: 10°C) obtained from the following composition:
Ethyl acrylate/normal butyl methacrylate/acrylic acid = 25/73/2 (% by weight).

### •Urethane resin: (III)

Water dispersion of a urethane resin (glass transition point: -30°C) obtained by neutralizing a resin comprising 80 parts of a polycarbonate polyol having a number-average molecular weight of 2000 which was produced from 1,6-hexanediol and diethyl carbonate, 4 parts of polyethylene glycol having a number-average molecular weight of 400, 12 parts of methylene-bis(4-cyclohexyl isocyanate) and 4 parts of dimethylol propionic acid with triethylamine.

### •Epoxy compound: (IVA)

Polyglycerol polyglycidyl ether as a polyfunctional polyepoxy compound.

### •Melamine compound: (IVB)

Hexamethoxymethylol melamine

### •Oxazoline compound: (IVC)

Acrylic polymer having an oxazoline group and a polyalkyleneoxide chain "EPOCROSS" (oxazoline group content: 4.5 mmol/g) produced by Nippon Shokubai Co., Ltd.

### •Isocyanate-based compound: (IVD)

While stirring 1000 parts of hexamethylene diisocyanate at 60°C, 0.1 part of tetramethyl ammonium caprylate as a catalyst was added thereto. After 4 hr, 0.2 part of phosphoric acid was added to the reaction mixture to terminate the reaction, thereby obtaining an isocyanurate-type polyisocyanate composition. Then, 100 parts of the resulting isocyanurate-type polyisocyanate composition, 42.3 parts of methoxy polyethylene glycol having a number-average molecular weight of 400 and 29.5 parts of propylene glycol monomethyl ether acetate were charged, and held at 80°C for 7 hr. Thereafter, while maintaining the temperature of the reaction solution at 60°C, 35.8 parts of methyl isobutanoyl acetate, 32.2 parts of diethyl malonate and 0.88 part of a 28% methanol solution of sodium methoxide were added to the reaction solution, and the resulting reaction mixture was maintained for 4 hr. Then, 58.9 parts of n-butanol was added to the reaction mixture, and the obtained reaction solution was maintained at 80°C for 2 hr. Thereafter, 0.86 part of 2-ethylhexyl acid phosphate was added to the reaction solution, thereby obtaining an active methylene-blocked polyisocyanate.

### •Particles: (VA)

Silica particles having an average particle diameter of 0.15 µm.

### •Particles: (VB)

Silica particles having an average particle diameter of 0.07 µm.

### •Releasing agent (long-chain alkyl group-containing compound): (VIA)

A four-necked flask was charged with 200 parts of xylene and 600 parts of octadecyl isocyanate, and the contents of the flask were heated while stirring. From the time at which refluxing of xylene was initiated, 100 parts of polyvinyl alcohol having an average polymerization degree of 500 and a saponification degree of 88 mol% was added little by little to the flask at intervals of 10 min over about 2 hr. After completion of the addition of polyvinyl alcohol, the contents of the flask were further refluxed for 2 hr, and then the reaction thereof was stopped. The obtained reaction mixture was cooled to about 80°C, and then added to methanol, thereby obtaining a white precipitate as a reaction product. The resulting precipitate was separated from the reaction mixture by filtration, and 140 parts of xylene was added thereto. The obtained mixture was heated to completely dissolve the precipitate in xylene, and then methanol was added again thereto to obtain a precipitate. The precipitation procedure was repeated several times. Thereafter, the resulting precipitate was washed with methanol, and then dried and pulverized, thereby obtaining the releasing agent.

### • Releasing agent (fluorine compound): (VIB)

Water dispersion of fluorine compound obtained from the following composition:
Octadecyl acrylate/perfluorohexylethyl methacrylate/vinyl chloride = 66/17/17 (% by weight).

### • Polyether group-containing condensation-type silicone: (VIC)

Polyether group-containing silicone having a number-average molecular weight of 7000 and comprising polyethylene glycol (end group: hydroxyl group) in which a molar ratio of ethylene glycol chains to dimethyl silicone was 8:100, on a side chain of the dimethyl silicone (assuming that a molar amount of a siloxane bond in the silicone is 1, a molar ratio of an ether bond in the polyether group is 0.07). In the polyether group-containing condensation type silicone, low molecular weight components having a number-average molecular weight of not more than 500 were present in an amount of 3%, and neither a vinyl group bonded to silicon (vinyl silane) nor a hydrogen group bonded to silicon (hydrogen silane) was present. Meanwhile, the present compound was used in the form of a water dispersion of the composition prepared by blending the polyether group-containing silicone with sodium dodecylbenzenesulfonate at a weight ratio of 1:0.25.

### • Addition-type silicone: (VID)

Water dispersion of an addition-type silicone prepared by mixing the compounds at the following compositional ratio:
Water dispersion comprising 80% by weight of methyl vinyl polysiloxane comprising 0.6 mol% of a vinyl group, 5% by weight of methyl hydrogen polysiloxane comprising 30 mol% of a hydrogen silane group (hydrogen group), 5% by weight of 3-glycidoxypropyl trimethoxysilane, 10% by weight of polyethylene glycol butyl ether, and a platinum catalyst.

### • Wax: (VIE)

Wax emulsion prepared by charging 300 g of a polyethyleneoxide wax having a melting point of 105°C, an acid value of 16 mgKOH/g, a density of 0.93 g/mL and an average molecular weight of 5000, 650 g of ion-exchanged water, 50 g of decaglycerol monooleate as a surfactant and 10 g of a 48% potassium hydroxide aqueous solution into a 1.5 L-capacity emulsification facility equipped with a stirrer, a thermometer and a temperature controller, followed by replacing an inside atmosphere of the facility with nitrogen and then hermetically sealing the facility; subjecting the contents of the facility to high-speed stirring at 150°C for 1 hr and then cooling the contents of the facility to 130°C; and allowing the resulting reaction mixture to pass through a high-pressure homogenizer under a pressure of 400 atm and then cooling the obtained mixture to 40°C.

### • Antistatic agent (ammonium group-containing compound): (VIIA)

High-molecular weight compound having a number-average molecular weight of 50000 which was constituted of a constitutional unit represented by the following formula 2 and whose counter ion was a methanesulfonic acid ion.

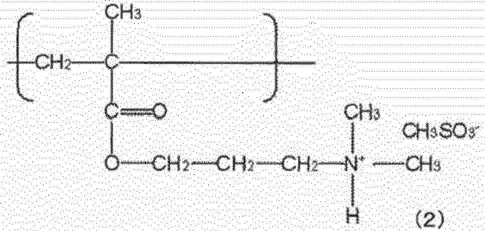

### • Antistatic agent (ammonium group-containing compound): (VIIB)

Polymer having a pyrrolidinium ring on a main chain thereof which was prepared by polymerizing the following composition:
Diallyl dimethyl ammonium chloride/dimethyl acrylamide/N-methylol acrylamide = 90/5/5 (mol%). Number-average molecular weight: 30000.

### • Antistatic agent (conductive polymer): (VIIC)

"Orgacon ICP1010" produced by Agfa-Gevaert NV which was prepared from polyethylenedioxythiophene and polystyrenesulfonic acid.

### • Polyether compound: (IX)

Polyethyleneoxide adduct of a diglycerol structure having an average molecular weight of 350.

### Example 1:

A mixed raw material obtained by mixing the polyesters (A), (B) and (C) in amounts of 91%, 3% and 6%, respectively, as a raw material for outermost layers (surface layers), and a mixed raw material obtained by mixing the polyesters (A) and (B) in amounts of 97% and 3%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 2:21:2 as output), followed by cooling and solidifying the thus extruded sheet on the chilled roll, thereby obtaining an undrawn sheet.

Next, the thus obtained undrawn sheet was drawn utilizing a difference between peripheral speeds of rolls at 85°C at a draw ratio of 3.2 times in a longitudinal direction thereof. Thereafter, a coating solution A1 shown in Table 1 below was applied on one surface of the thus obtained longitudinally drawn film such that the thickness of the resulting coating layer (after drying) was 0.20 µm. Then, the resulting coated film was introduced into a tenter where the film was dried at 95°C for 10 sec and then drawn at 120°C at a draw ratio of 4.3 times in a lateral direction thereof, and further subjected to heat-setting treatment at 230°C for 10 sec. Thereafter, the obtained drawn sheet was relaxed by 2% in a lateral direction thereof, thereby obtaining a polyester film having a thickness of 50 µm.

As a result of evaluating the thus obtained polyester film, it was confirmed that the polyester film exhibited good adhesion properties. Various properties of the thus obtained film are shown in Table 2 below.

### Examples 2 to 18:

The same procedure as in Example 1 was conducted except that the coating agent composition was replaced with those shown in Table 1, thereby obtaining polyester films. As shown in Table 2, the resulting polyester films exhibited good adhesion properties.

### Comparative Example 1:

The same procedure as in Example 1 was conducted except that no coating layer was formed, thereby obtaining a polyester film. As a result of evaluating the thus obtained polyester film, the properties thereof were as shown in Table 2, i.e., it was confirmed that the polyester film exhibited no adhesion properties.

### Comparative Examples 2 to 4:

The same procedure as in Example 1 was conducted except that the coating agent composition was replaced with those shown in Table 1, thereby obtaining polyester films. As shown in Table 2, the resulting polyester films exhibited no adhesion properties.

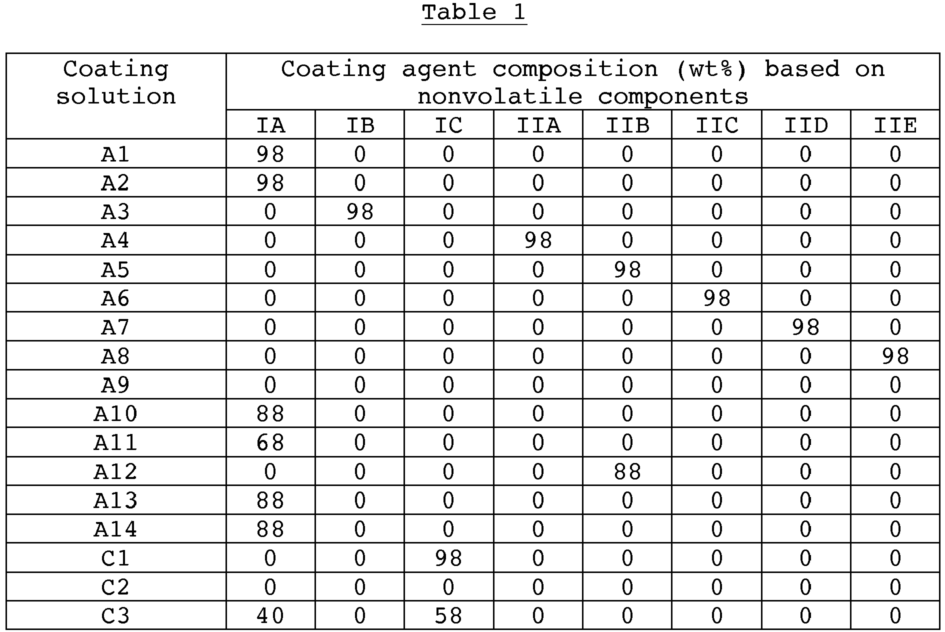

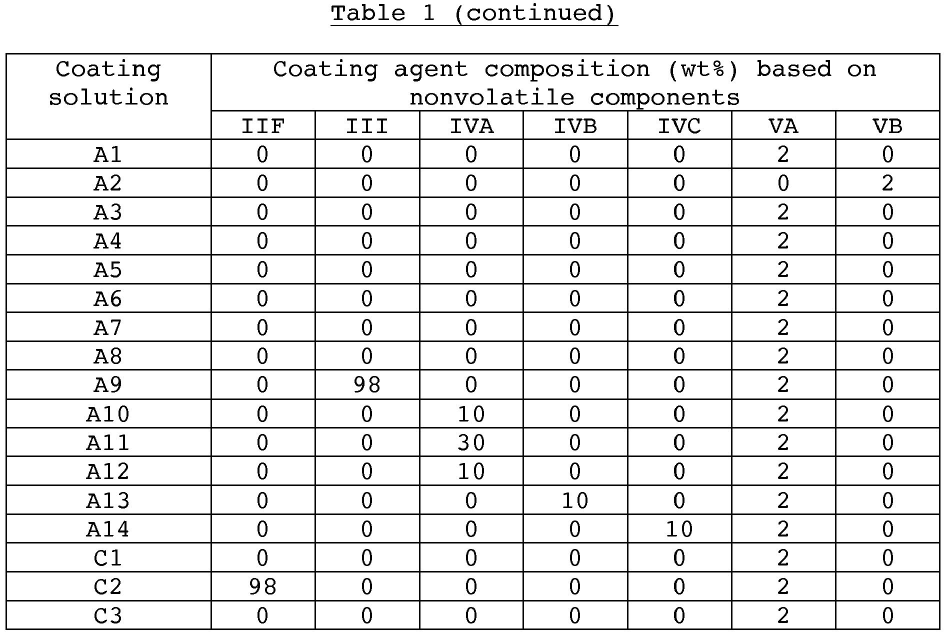

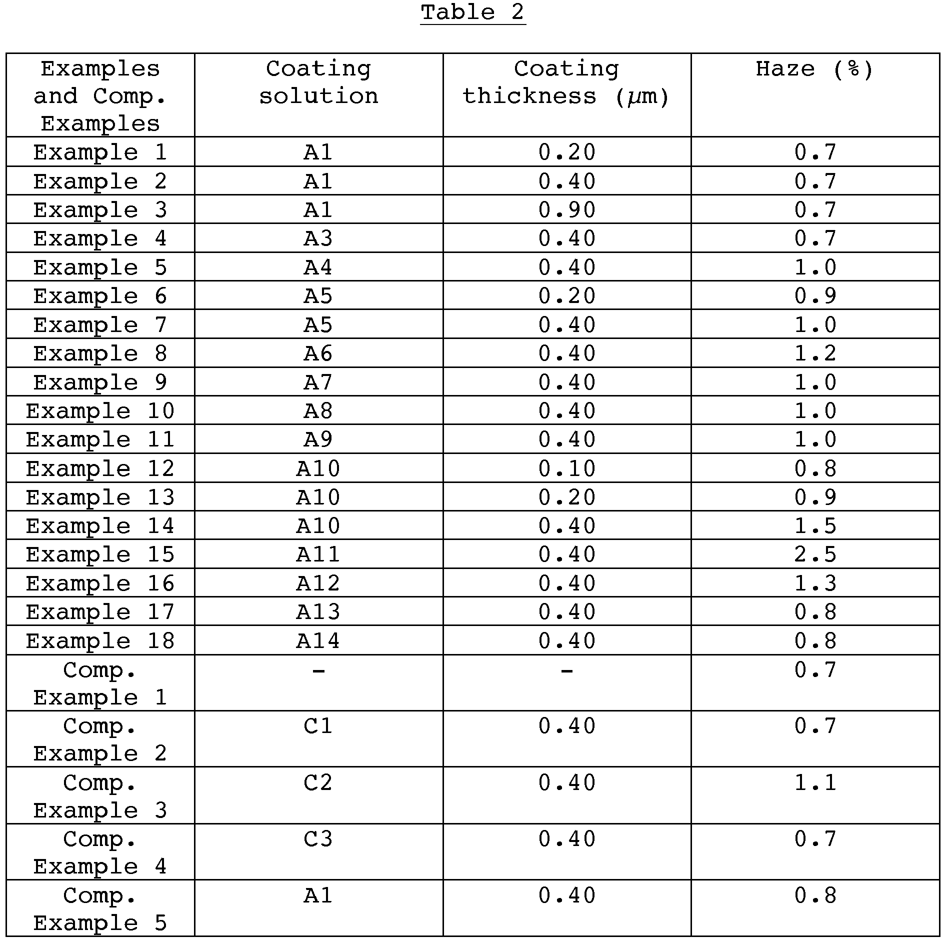

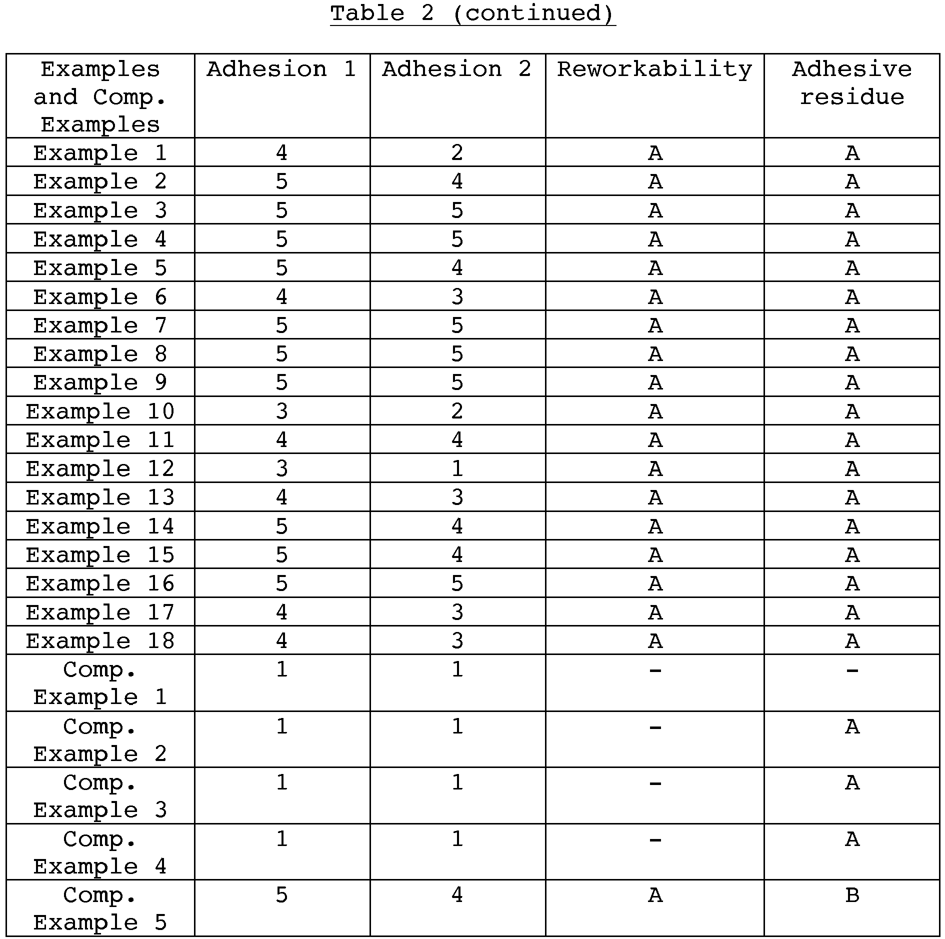

### Example 19:

A mixed raw material obtained by mixing the polyesters (A), (B) and (D) in amounts of 80%, 3% and 17%, respectively, as a raw material for outermost layers (surface layers), and a mixed raw material obtained by mixing the polyesters (A) and (B) in amounts of 97% and 3%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 3:44:3 as output), followed by cooling and solidifying the thus extruded sheet on the chilled roll, thereby obtaining an undrawn sheet. Next, the thus obtained undrawn sheet was drawn utilizing a difference between peripheral speeds of rolls at 85°C at a draw ratio of 3.2 times in a longitudinal direction thereof. Thereafter, a coating solution A1 shown in Table 1 above was applied on one side surface of the thus obtained longitudinally drawn film such that the thickness of the resulting coating layer (after drying) was 0.40 µm (first coating layer), and a coating solution B1 shown in Table 3 below was applied on an opposite side surface of the longitudinally drawn film such that the thickness of the resulting coating layer (after drying) was 0.03 µm (second coating layer). Then, the resulting coated film was introduced into a tenter where the film was dried at 95°C for 10 sec and then drawn at 120°C at a draw ratio of 4.3 times in a lateral direction thereof, and further subjected to heat-setting treatment at 230°C for 10 sec. Next, the obtained drawn sheet was relaxed by 2% in a lateral direction thereof, thereby obtaining a polyester film having a thickness of 50 µm and Sa of 12 nm on the second coating layer side surface thereof.

As a result of evaluating the thus obtained polyester film, it was confirmed that the polyester film exhibited good adhesion properties and anti-blocking properties. Various properties of the thus obtained film are shown in Table 4 below.

### Examples 20 to 56:

The same procedure as in Example 19 was conducted except that the coating agent composition was replaced with those shown in Tables 1 and 3, thereby obtaining polyester films. As shown in Tables 4 and 5, the resulting polyester films exhibited good adhesion properties and anti-blocking properties.

### Examples 57 to 66:

The same procedure as in Example 19 was conducted except that the polyester composition for the surface layers was changed to a mixed raw material obtained by mixing the polyesters (A), (B) and (E) in amounts of 72%, 3% and 25%, respectively, and the respective mixed raw materials were co-extruded into a two-kind/three-layer structure (surface layer/intermediate layer/surface layer = 3:19:3 as output), and further the coating agent composition was replaced with those shown in Tables 1 and 3, thereby obtaining polyester films. The thus obtained polyester films had Sa of 30 nm on the second coating layer side surface thereof, and also exhibited good adhesion properties and anti-blocking properties. Various properties of these films are shown in Table 6 below.

### Examples 67 to 76:

The same procedure as in Example 19 was conducted except that the polyester composition for the surface layers was changed to a mixed raw material obtained by mixing the polyesters (A), (B) and (D) in amounts of 91%, 3% and 6%, respectively, and the respective mixed raw materials were co-extruded into a two-kind/three-layer structure (surface layer/intermediate layer/surface layer = 2:21:2 as output), and further the coating agent composition was replaced with those shown in Tables 1 and 3, thereby obtaining polyester films. The thus obtained polyester films had Sa of 9 nm on the second coating layer side surface thereof, and also exhibited good adhesion properties and anti-blocking properties. Various properties of these films are shown in Table 6 below.

### Examples 77 to 79:

The same procedure as in Example 19 was conducted except that the coating agent composition was replaced with those shown in Tables 1 and 3, thereby obtaining polyester films. As shown in Table 6, the resulting polyester films exhibited good adhesion properties, but were deteriorated in anti-blocking properties.

### Comparative Example 5:

The same procedure as in Example 19 was conducted except that no coating layer was formed, thereby obtaining a polyester film. As a result of evaluating the thus obtained polyester film, the properties thereof were as shown in Table 7, i.e., it was confirmed that the polyester film exhibited no adhesion properties.

### Comparative Examples 6 and 7:

The same procedure as in Example 1 was conducted except that the coating agent composition was replaced with those shown in Table 1, thereby obtaining polyester films. As shown in Table 7, the resulting polyester films exhibited poor adhesion properties.

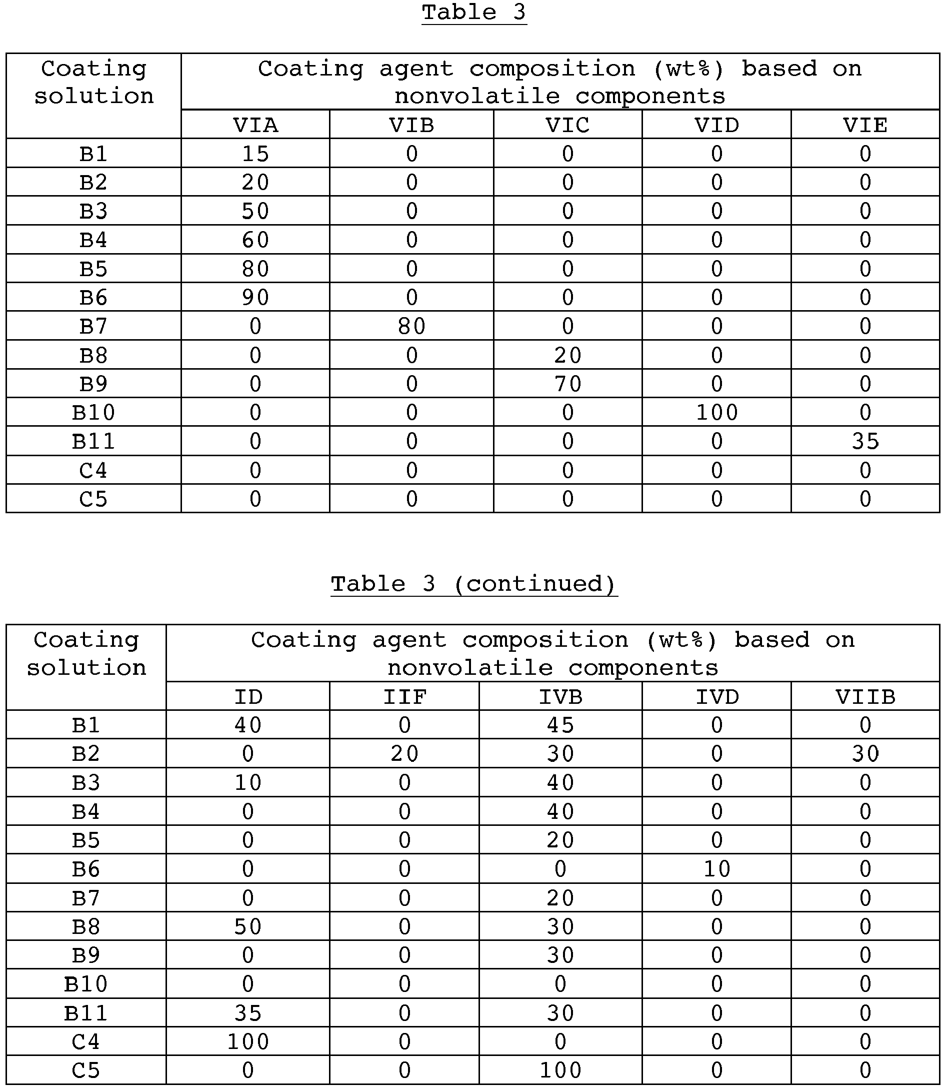

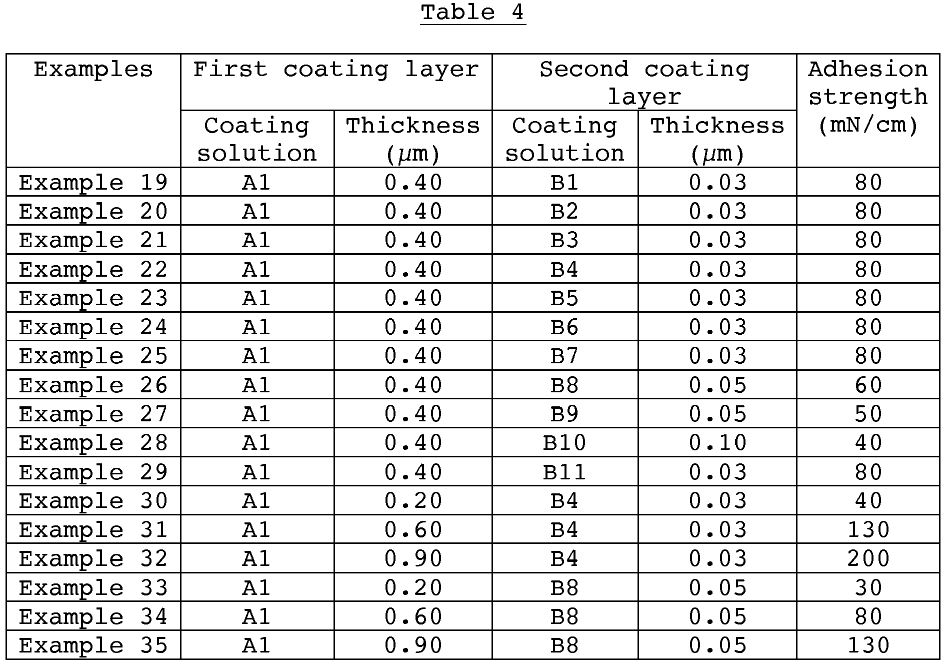

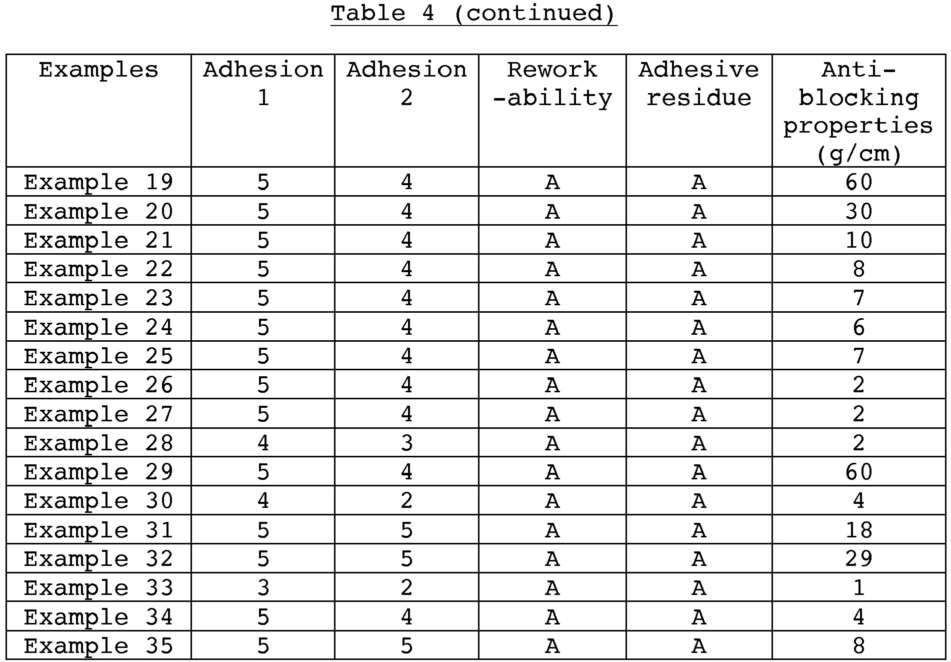

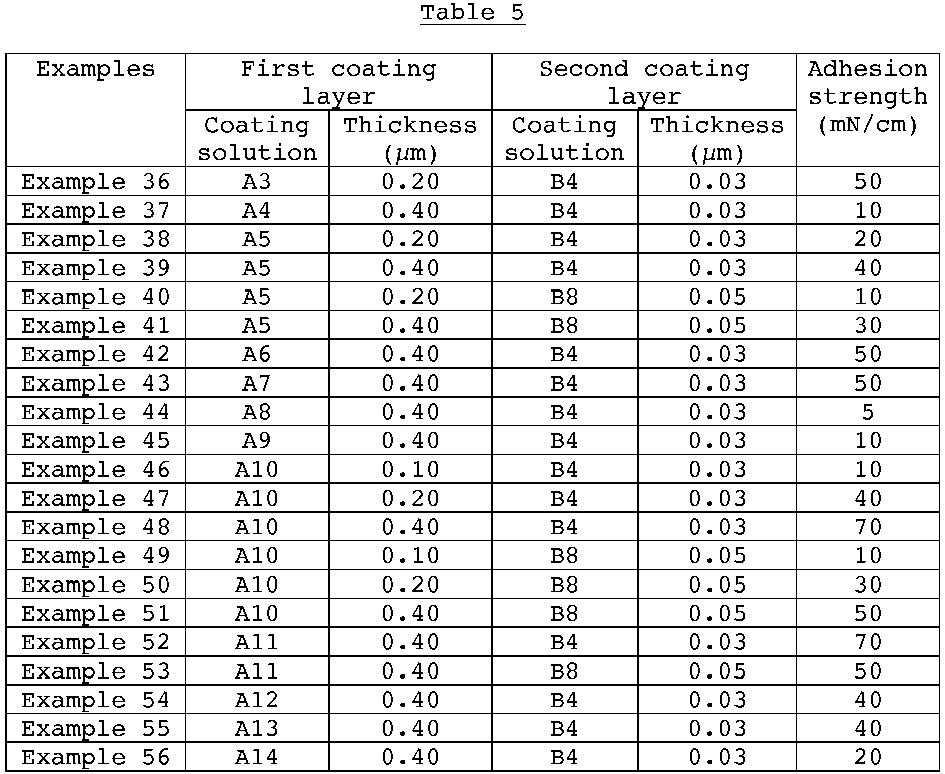

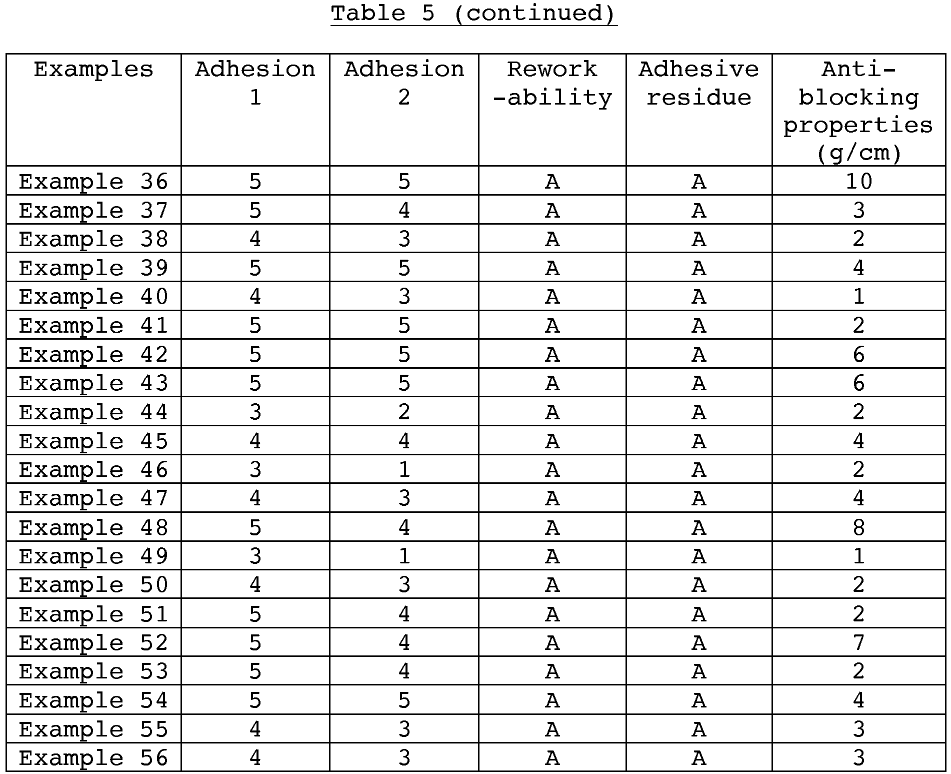

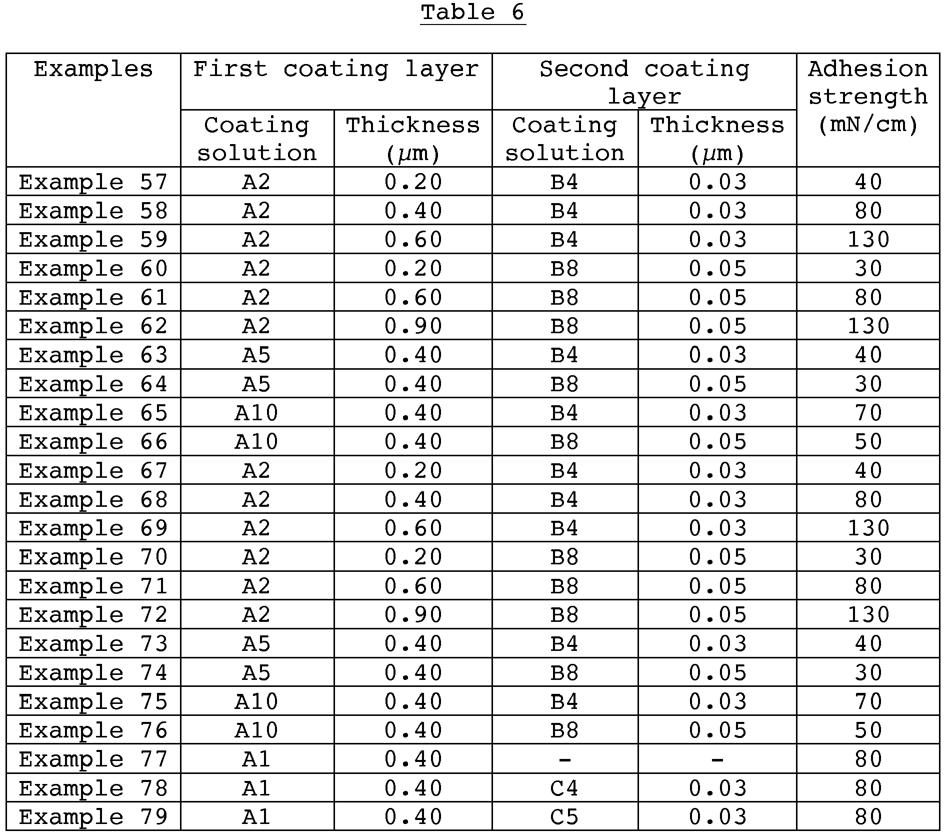

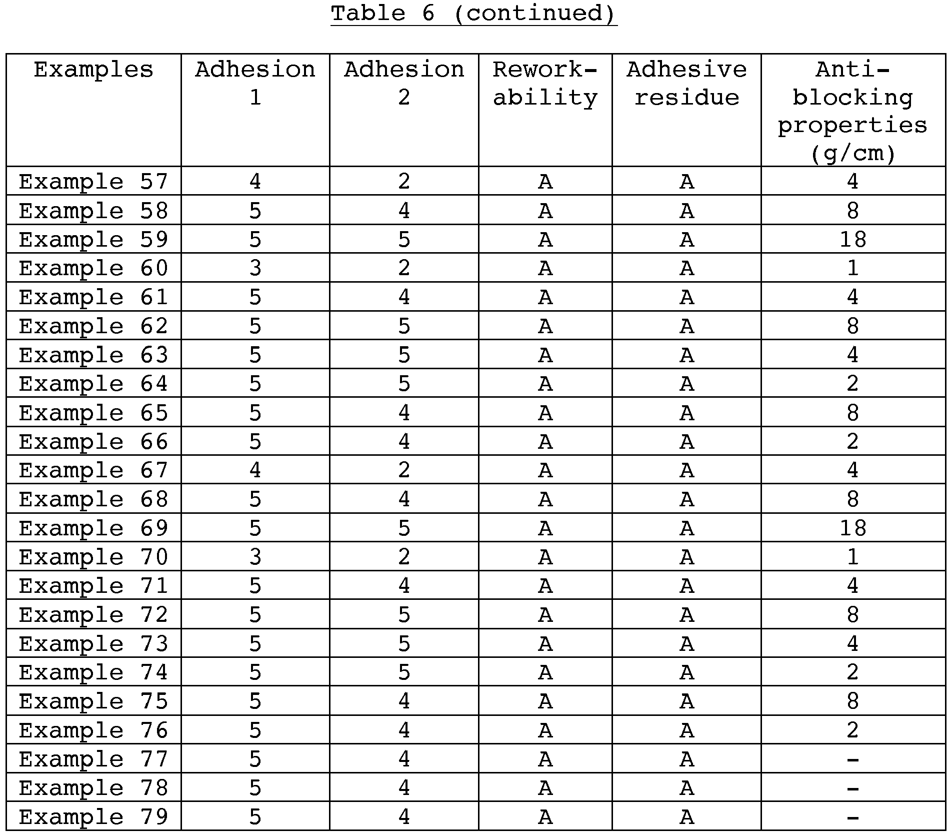

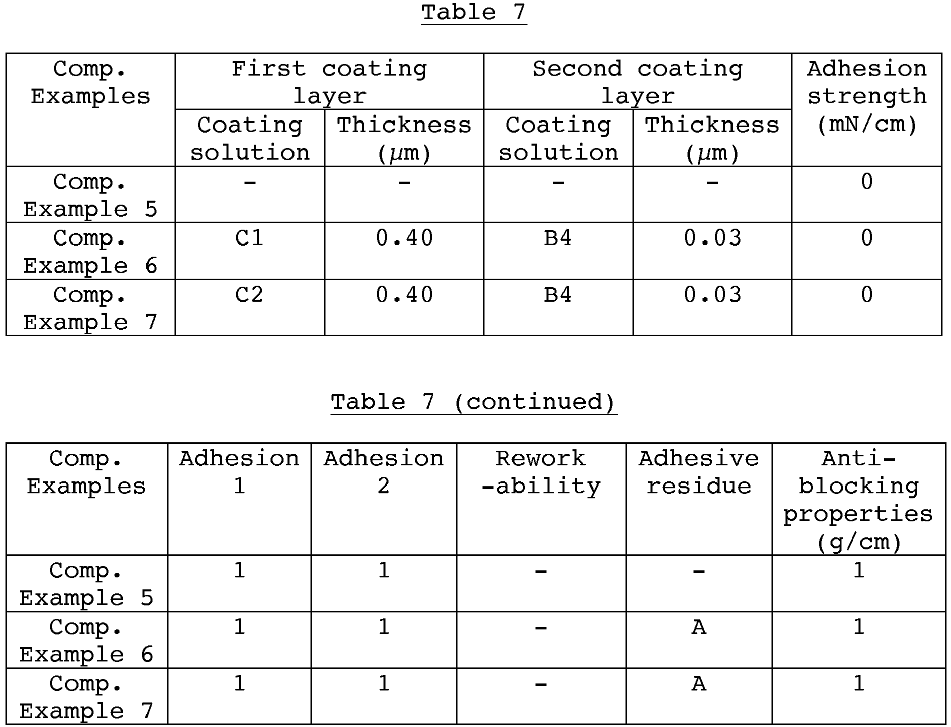

### Example 80:

A mixed raw material obtained by mixing the polyesters (A), (B) and (D) in amounts of 80%, 3% and 17%, respectively, as a raw material for outermost layers (surface layers), and a mixed raw material obtained by mixing the polyesters (A) and (B) in amounts of 97% and 3%, respectively, as a raw material for an intermediate layer, were respectively charged into two extruders, melted therein at 285°C, and then co-extruded therefrom on a chilled roll whose surface was controlled to a temperature of 40°C into a two-kind/three-layer structure (surface layer/intermediate layer/surface layer = 3:44:3 as output), followed by cooling and solidifying the thus extruded sheet on the chilled roll, thereby obtaining an undrawn sheet. Next, the thus obtained undrawn sheet was drawn utilizing a difference between peripheral speeds of rolls at 85°C at a draw ratio of 3.2 times in a longitudinal direction thereof. Thereafter, a coating solution A1 shown in Table 1 above was applied on one side surface of the thus obtained longitudinally drawn film such that the thickness of the resulting coating layer (after drying) was 0.40 µm (first coating layer), and a coating solution B12 shown in Table 8 below was applied on an opposite side surface of the longitudinally drawn film such that the thickness of the resulting coating layer (after drying) was 0.06 µm (second coating layer). Then, the resulting coated film was introduced into a tenter where the film was dried at 95°C for 10 sec and then drawn at 120°C at a draw ratio of 4.3 times in a lateral direction thereof, and further subjected to heat-setting treatment at 230°C for 10 sec. Next, the obtained drawn sheet was relaxed by 2% in a lateral direction thereof, thereby obtaining a polyester film having a thickness of 50 µm and Sa of 12 nm on the second coating layer side surface thereof.

As a result of evaluating the thus obtained polyester film, it was confirmed that the polyester film exhibited good adhesion properties and dust and dirt-deposition preventing properties. Various properties of the thus obtained film are shown in Tables 9 and 10 below.

### Examples 81 to 125:

The same procedure as in Example 80 was conducted except that the coating agent composition was replaced with those shown in Tables 1 and 8, thereby obtaining polyester films. As shown in Tables 9 to 12, the resulting polyester films exhibited good adhesion properties and dust and dirt-deposition preventing properties.

### Examples 126 to 138:

The same procedure as in Example 80 was conducted except that the polyester composition for the surface layers was changed to a mixed raw material obtained by mixing the polyesters (A), (B) and (E) in amounts of 72%, 3% and 25%, respectively, and the respective mixed raw materials were co-extruded into a two-kind/three-layer structure (surface layer/intermediate layer/surface layer = 3:19:3 as output), and further the coating agent composition was replaced with those shown in Tables 1 and 2, thereby obtaining polyester films. The thus obtained polyester films had Sa of 30 nm on the second coating layer side surface thereof, and also exhibited good adhesion properties and dust and dirt-deposition preventing properties. Various properties of these films are shown in Tables 13 and 14 below.

### Examples 139 to 151:

The same procedure as in Example 80 was conducted except that the polyester composition for the surface layers was changed to a mixed raw material obtained by mixing the polyesters (A), (B) and (D) in amounts of 91%, 3% and 6%, respectively, and the respective mixed raw materials were co-extruded into a two-kind/three-layer structure (surface layer/intermediate layer/surface layer = 2:21:2 as output), and further the coating agent composition was replaced with those shown in Tables 1 and 2, thereby obtaining polyester films. The thus obtained polyester films had Sa of 9 nm on the second coating layer side surface thereof, and also exhibited good adhesion properties and dust and dirt-deposition preventing properties. Various properties of these films are shown in Tables 13 and 14 below.

### Examples 152 to 154:

The same procedure as in Example 80 was conducted except that the coating agent composition was replaced with those shown in Tables 1 and 8, thereby obtaining polyester films. As shown in Tables 13 and 14, the resulting polyester films exhibited good adhesion properties, but were deteriorated in dust and dirt-deposition preventing properties.

### Comparative Example 8:

The same procedure as in Example 80 was conducted except that no coating layer was formed, thereby obtaining a polyester film. As a result of evaluating the thus obtained polyester film, the properties thereof were as shown in Tables 15 and 16, i.e., it was confirmed that the polyester film exhibited no adhesion properties and was deteriorated in dust and dirt-deposition preventing properties.

### Comparative Examples 9 and 10:

The same procedure as in Example 80 was conducted except that the coating agent composition was replaced with those shown in Tables 1 and 8, thereby obtaining polyester films. As shown in Tables 15 and 16, the resulting polyester films exhibited poor adhesion properties.

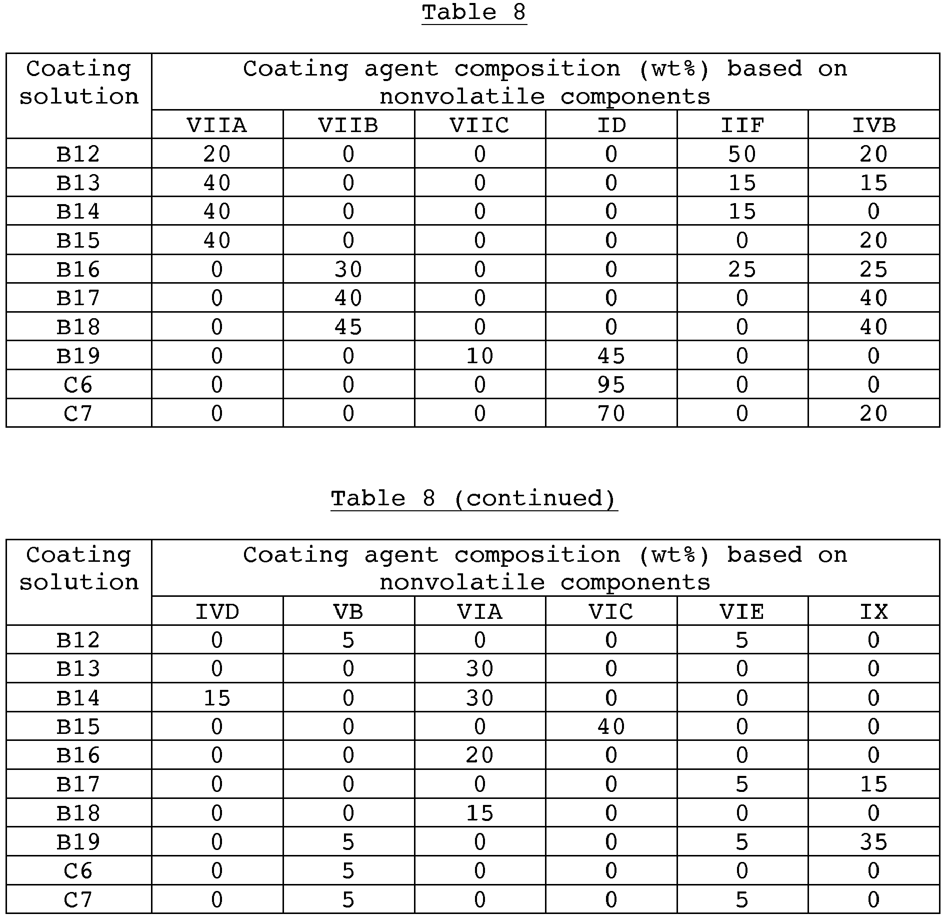

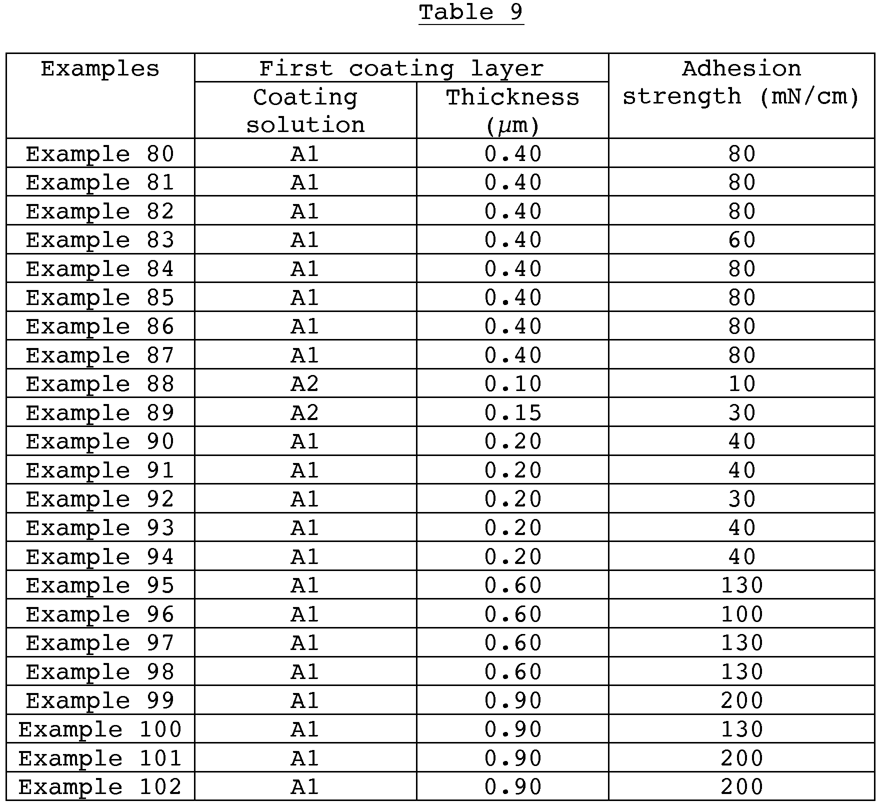

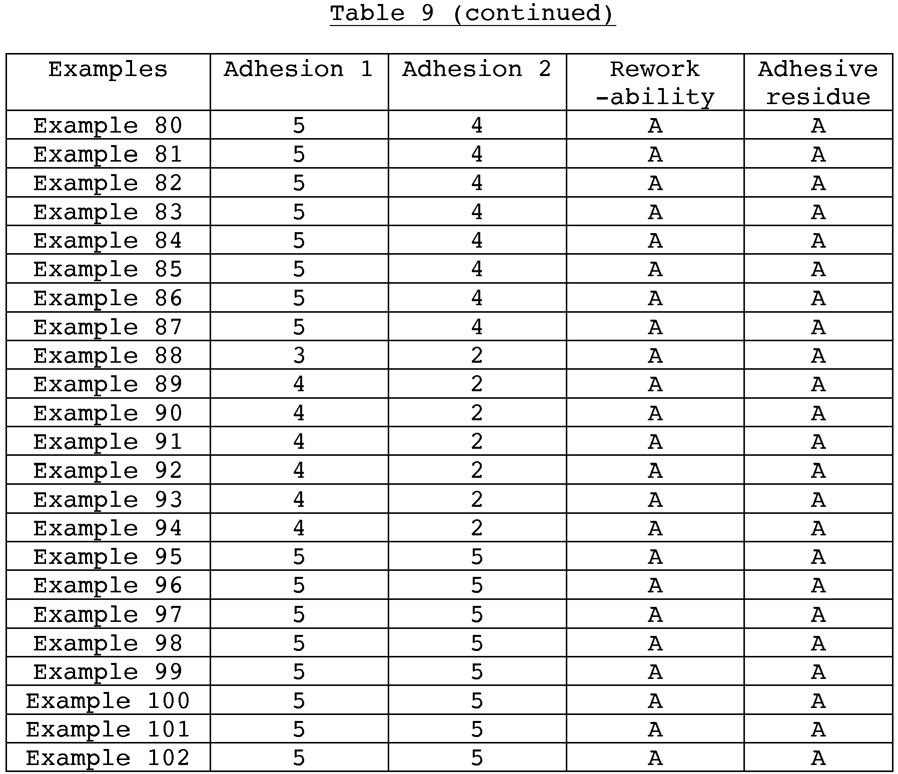

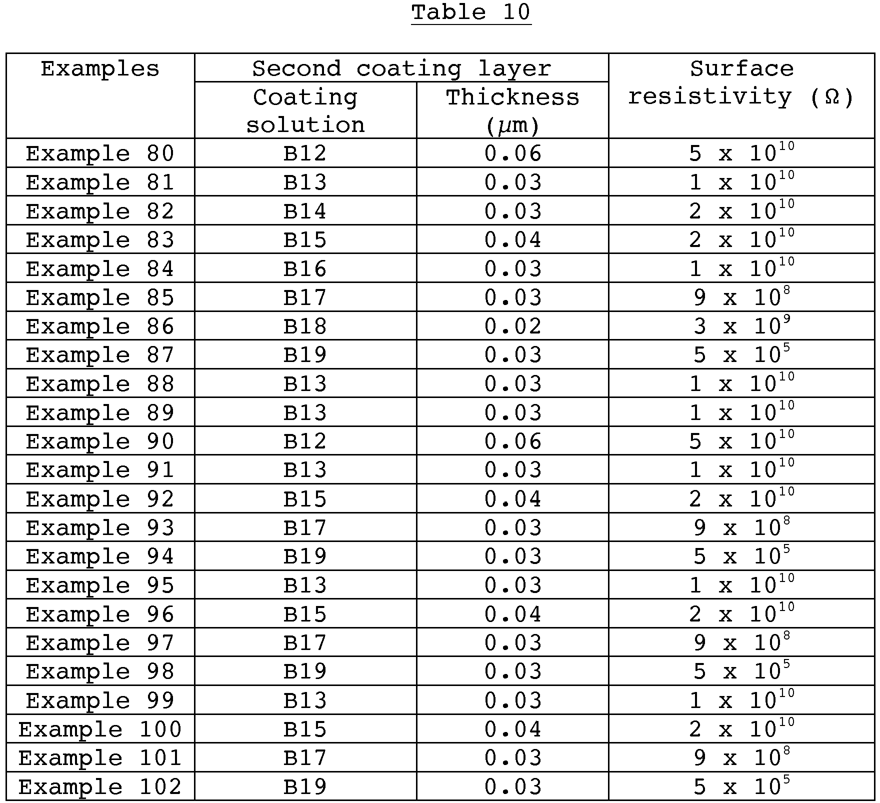

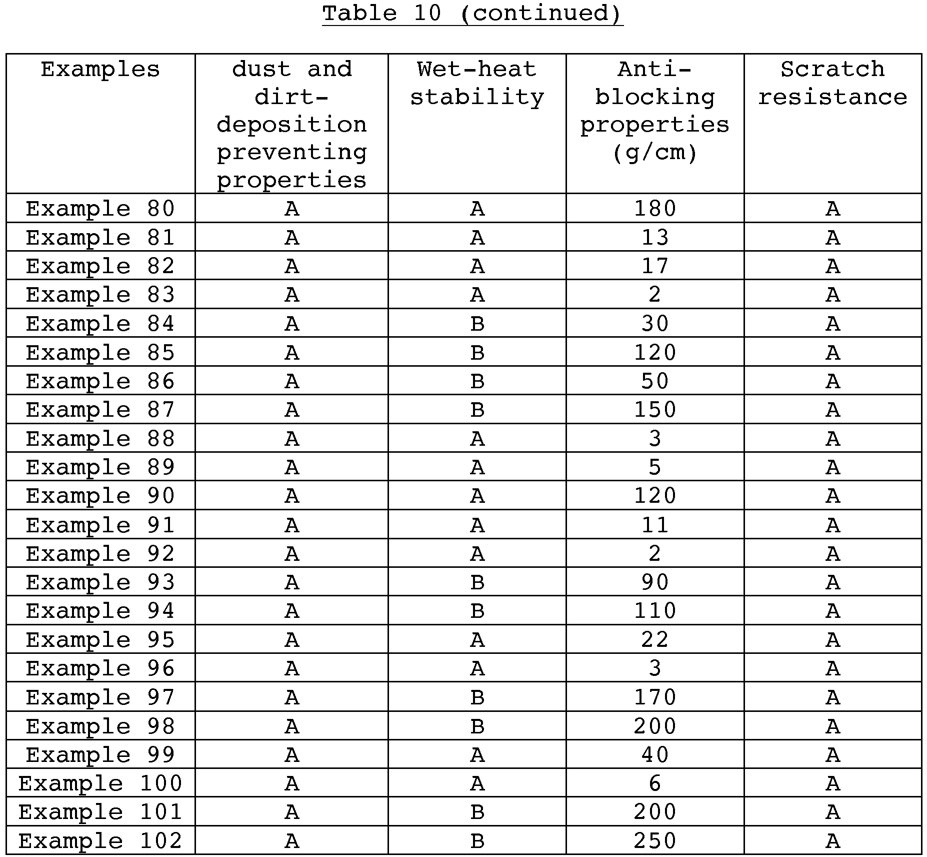

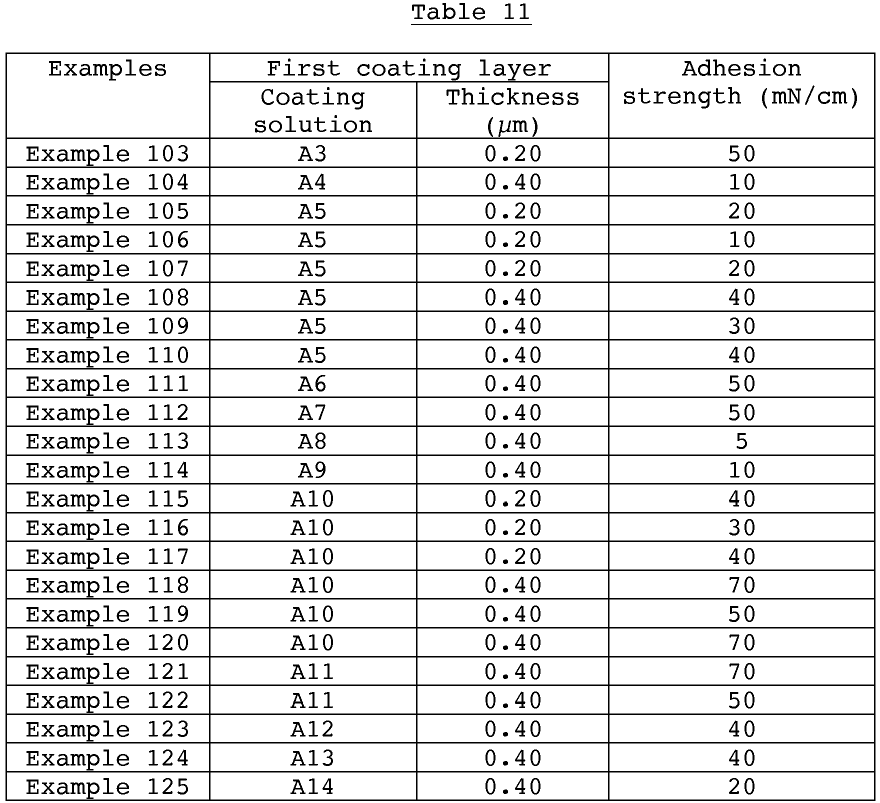

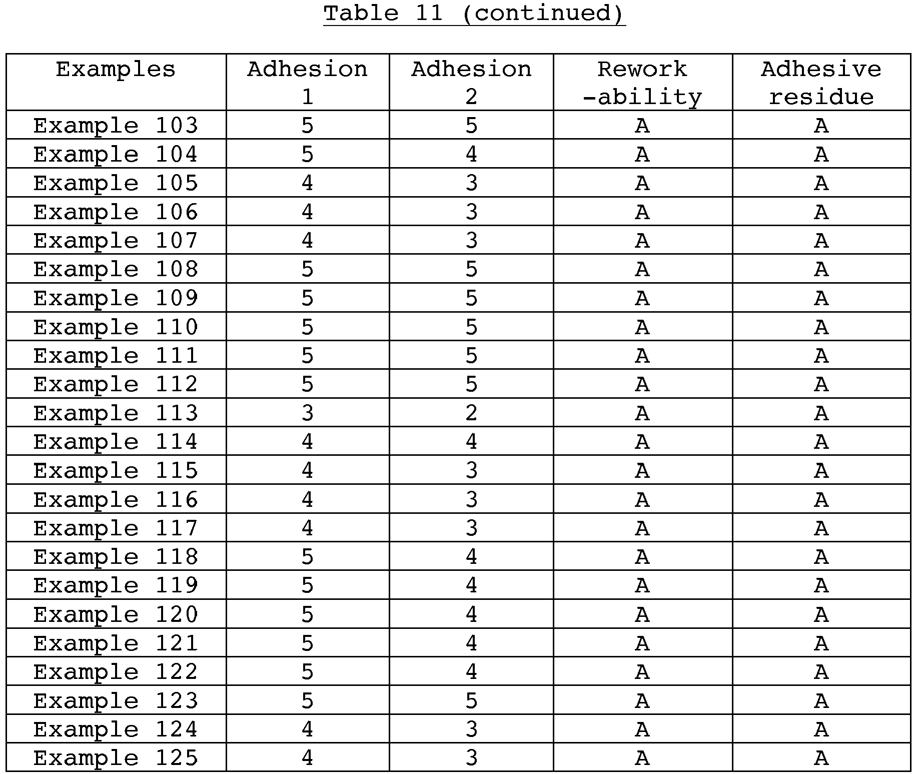

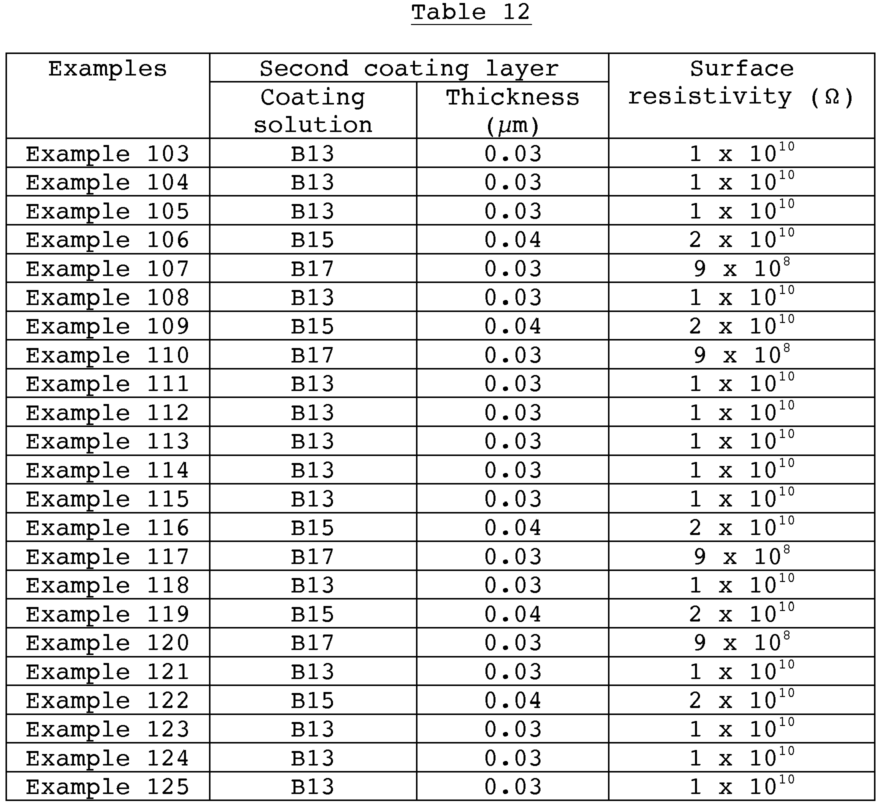

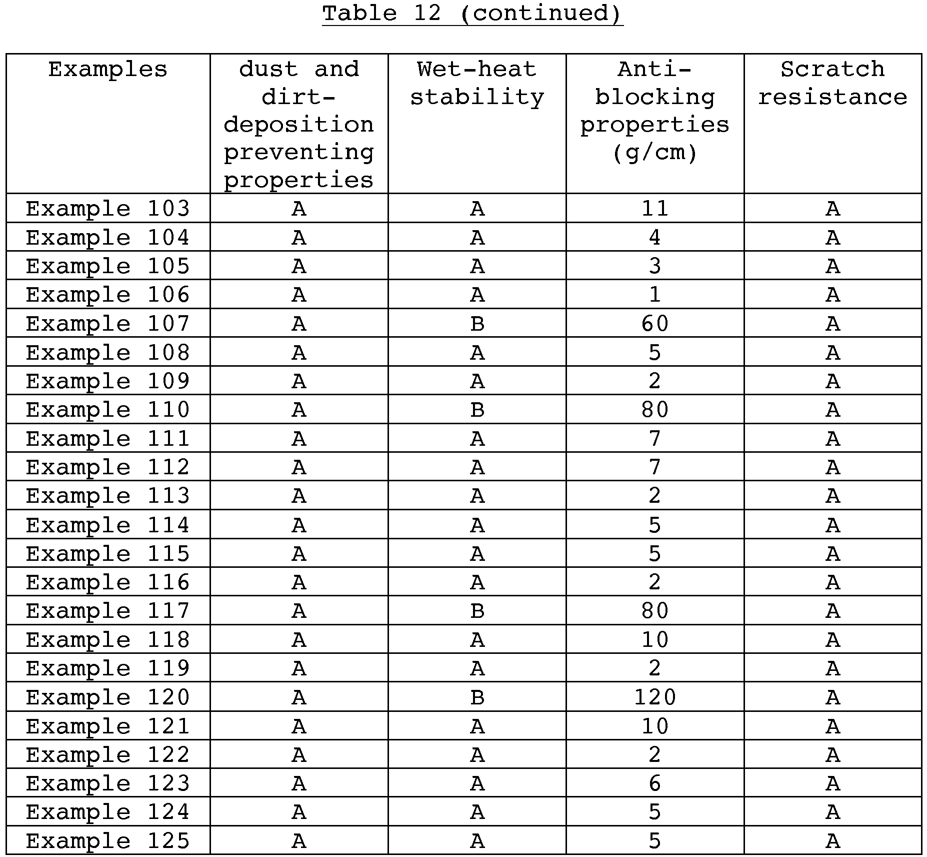

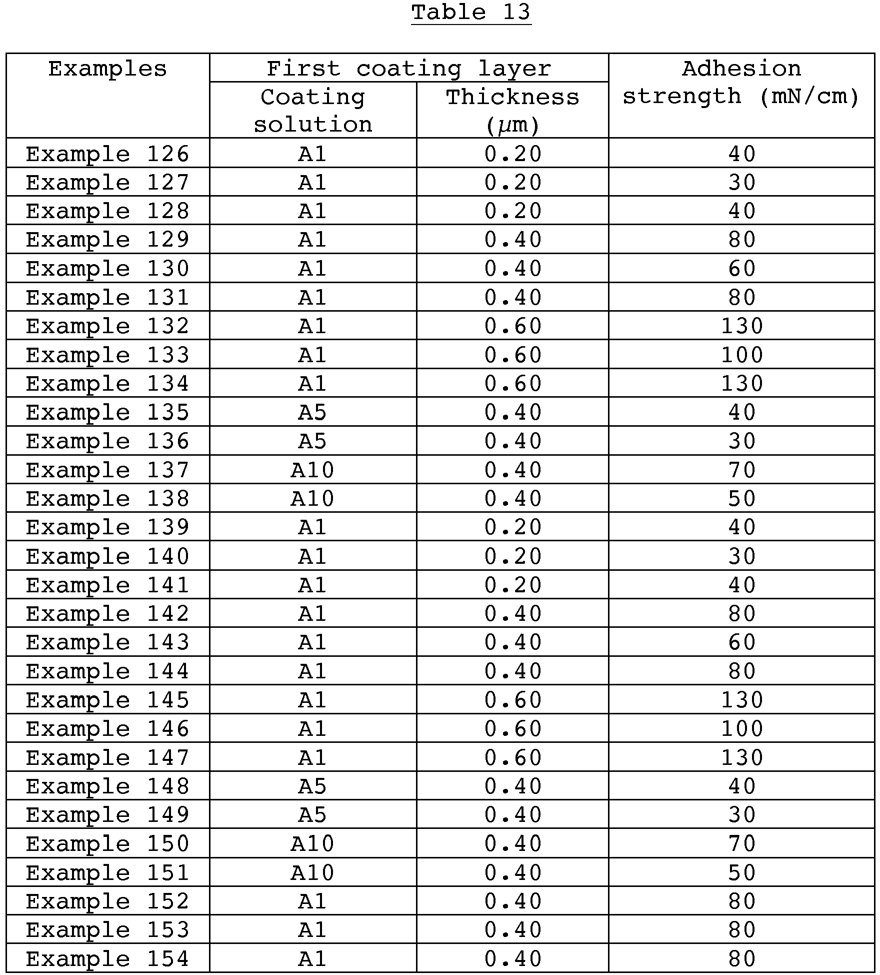

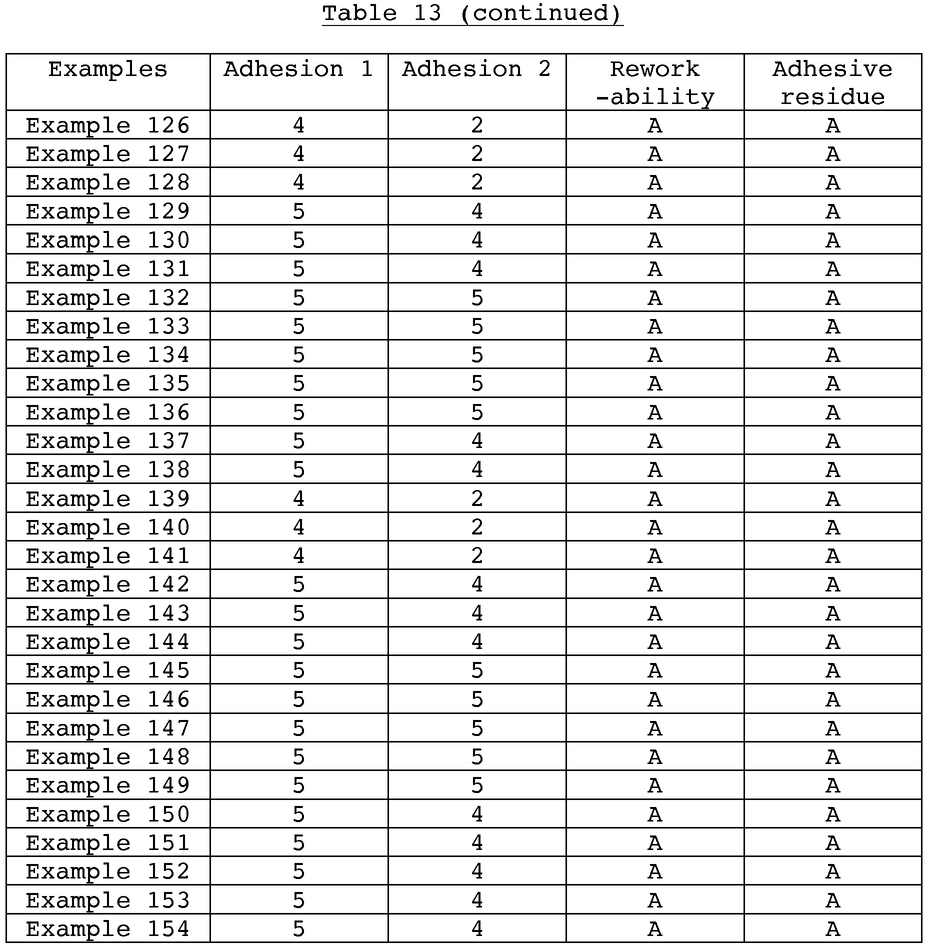

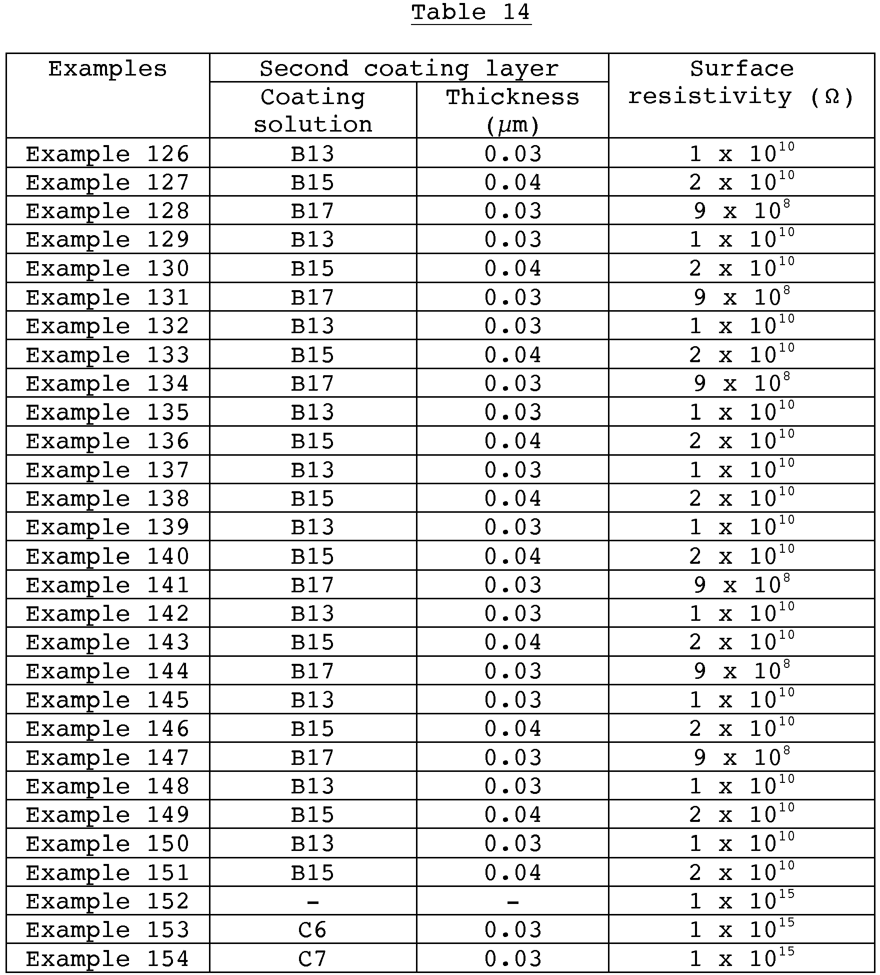

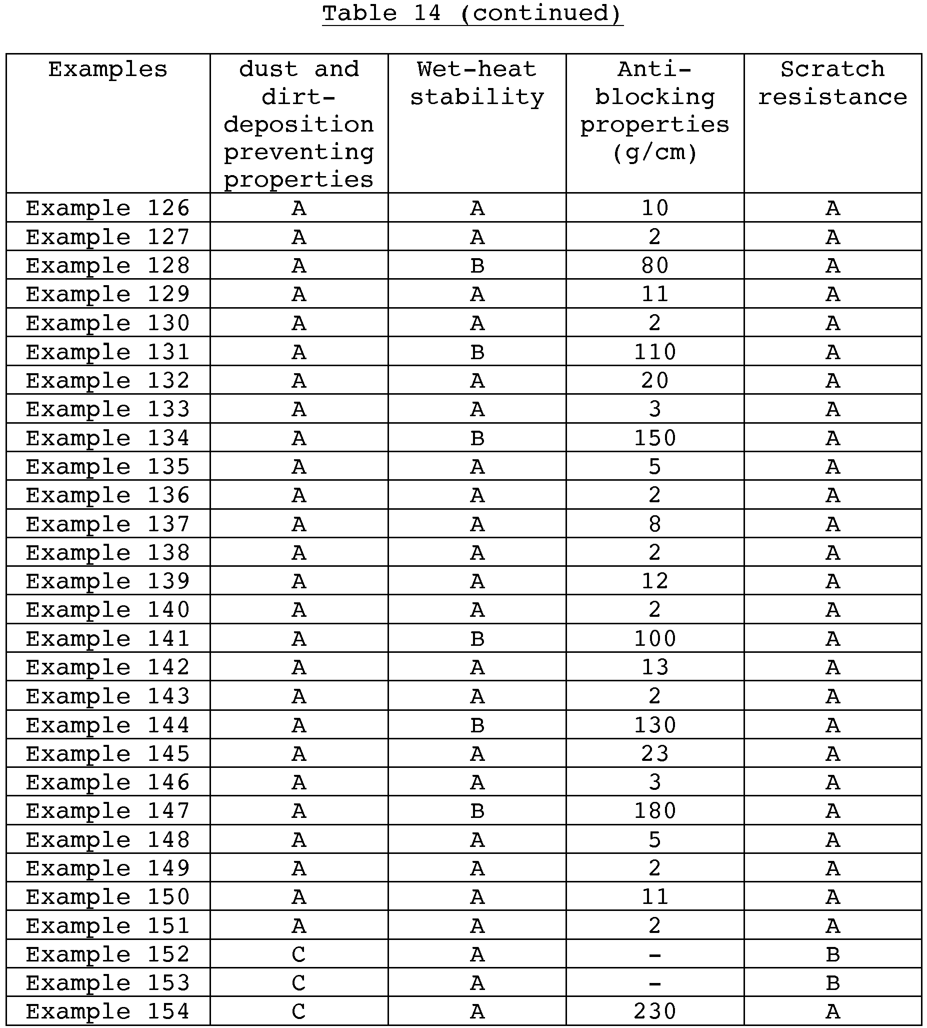

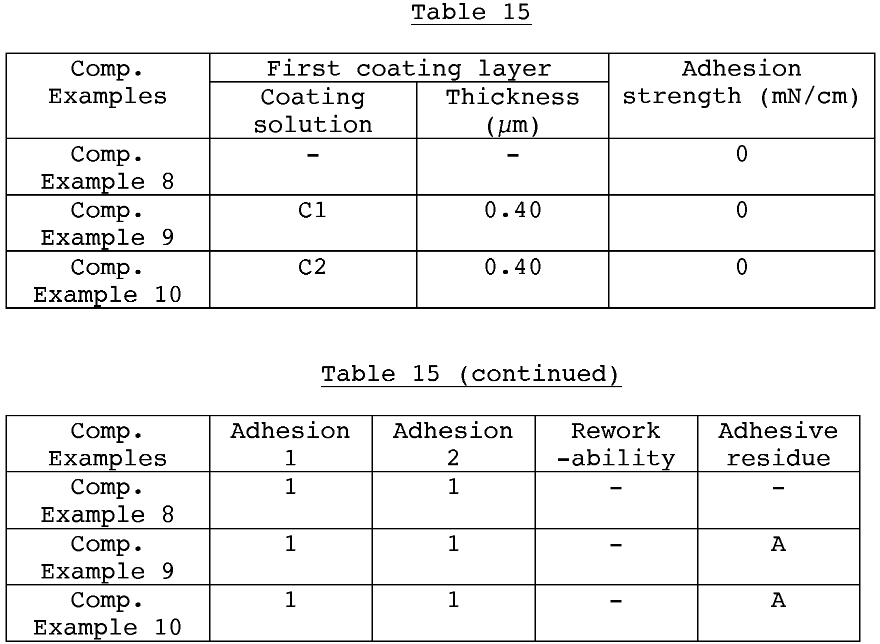

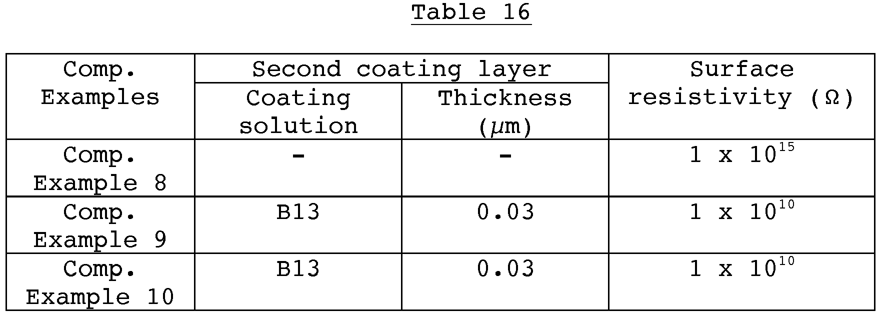

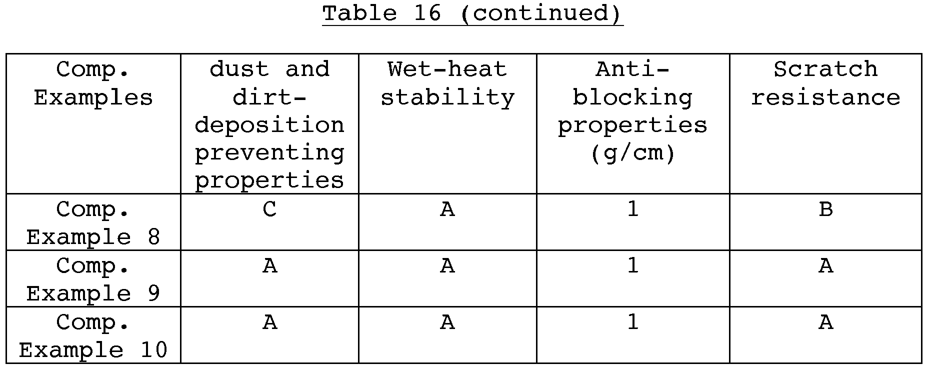

### INDUSTRIAL APPLICABILITY

The film of the present invention can be suitably used, for example, in the applications as a surface protective film used for preventing formation of scratches or deposition of contaminants upon transportation, storage or processing of resin plates, metal plates, etc., in which the film is required to have less fisheyes, excellent mechanical strength and heat resistance as well as good adhesive properties.

## Claims

1. A coated film comprising a polyester film and a coating layer formed on at least one surface of the polyester film, which coating layer comprises a resin having a glass transition point of not higher than 0°C as a main component and has a thickness of 0.01 to 3 µm.

2. The coated film according to claim 1, further comprising an additional coating layer formed on an opposite surface of the polyester film which is opposed to the surface on which the coating layer comprising the resin having a glass transition point of not higher than 0°C as a main component is formed.

3. The coated film according to claim 2, wherein the additional coating layer formed on the opposite surface of the polyester film comprises a release agent.

4. The coated film according to claim 2 or 3, wherein the additional coating layer formed on the opposite surface of the polyester film comprises an antistatic agent.
